# EUROPEAN PATENT APPLICATION

(11) **EP 2 924 952 A1**
(43) Date of publication of application: **30.09.2015**
(21) Application number: 13869311.4
(22) Date of filing: 31.12.2013
(51) Int. Cl.: H04L 29/08

(54) **DATA SYNCHRONIZATION METHOD AND DEVICE**

(30) Priority: 31.12.2012 CN 201210593336
(71) Applicant: Huawei Technologies Co., Ltd., Longgang District Shenzhen, Guangdong 518129 (CN)
(72) Inventor: TAN, Wei, Shenzhen Guangdong 518129 (CN)
(74) Representative: Goddar, Heinz J.
(86) International application number: PCT/CN2013/091130
(87) International publication number: WO 2014/101889

(57) **Abstract**

Embodiments of the present invention provide a data synchronization method, and a device. The method includes: receiving, by a server, a synchronization task message sent by a first user equipment, where the synchronization task message includes: a synchronization task instruction and information about a to-be-synchronized file; determining, by the server according to the synchronization task instruction, historical synchronization operation information corresponding to the to-be-synchronized file, in historical synchronization information stored in the server; and sending, by the server, a response message of the synchronization task message to the first user equipment, where the response message carries an execution result of the synchronization task instruction. In the technical solution of the present invention, it can be implemented that a server records historical synchronization information used for a data synchronization between user equipments in a network system, thereby avoiding a problem of repeated file synchronization that may exist in the prior art and improving a utilization rate of a device resource.

## Description

This application claims priority to CN application No. 201210593336.4 filed on December 31, 2012, and entitled "DATA SYNCHRONIZATION METHOD, AND DEVICE", which is incorporated herein by reference in its entirety.

### TECHNICAL FIELD

The present invention relates to communications technologies, and in particular, to a data synchronization method, and a device.

### BACKGROUND

As information technologies develop rapidly, a modem home has become a digitized, network-based, and intelligent media center. People hope that they can conveniently enjoy abundant and colorful media files anywhere at home, whereas these media files may be stored in different devices.

In the prior art, a file synchronization operation can be performed between two user equipments (User Equipment, UE for short) by using, for example, a common Bluetooth technology, a universal serial bus (Universal Serial BUS, USB for short) technology, or iTunes software that is provided by Apple Inc. to perform point-to-point file synchronization between a UE and a personal computer (personal computer, PC for short).

However, in an existing file synchronization method, a repeated synchronization operation may be performed between user equipments, resulting in a waste of a device resource.

### SUMMARY

Embodiments of the present invention provide a data synchronization management method, a device, and a system, so as to solve a problem of repeated file synchronization in the prior art and improve a utilization rate of a device resource.

A first aspect of the present invention provides a data synchronization method, including:
receiving, by a server, a synchronization task message sent by a first user equipment, where the synchronization task message includes: a synchronization task instruction and information about a to-be-synchronized file;
determining, by the server according to the synchronization task instruction, historical synchronization operation information corresponding to the to-be-synchronized file, in historical synchronization information stored in the server; and
sending, by the server, a response message of the synchronization task message to the first user equipment, where the response message carries an execution result of the synchronization task instruction.

In a first possible implementation manner of the first aspect, the information about the to-be-synchronized file includes a universal resource locator URL corresponding to a storage address of the to-be-synchronized file; or
the information about the to-be-synchronized file includes a URL corresponding to a storage address of the to-be-synchronized file, and further includes a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

With reference to the first aspect or the first possible implementation manner of the first aspect, in a second possible implementation manner of the first aspect, the synchronization task instruction is a creation command, and the synchronization task message further carries information about the first user equipment and information about a second user equipment; and
after the determining, by the server according to the synchronization task instruction, historical synchronization operation information corresponding to the to-be-synchronized file, in historical synchronization information stored in the server, the method further includes:
determining, by the server, whether the information about the to-be-synchronized file is already stored in the historical synchronization information; and
if the information about the to-be-synchronized file is not stored in the historical synchronization information, storing, by the server, the information about the to-be-synchronized file in the historical synchronization information.

According to the second possible implementation manner of the first aspect, in a third possible implementation manner of the first aspect, the execution result that is of the synchronization task instruction and carried in the response message is used to indicate that the server has stored the information about the to-be-synchronized file in the historical synchronization information.

With reference to the first aspect or any one of the first to the third possible implementation manners of the first aspect, in a fourth possible implementation manner of the first aspect, the synchronization task instruction is the creation command, and the synchronization task message further carries the information about the first user equipment and the information about the second user equipment; and
after the determining, by the server according to the synchronization task instruction, historical synchronization operation information corresponding to the to-be-synchronized file, in historical synchronization information stored in the server, the method further includes:
if the server determines, according to the historical synchronization operation information corresponding to the to-be-synchronized file, that the second user equipment has not performed a synchronization operation on the to-be-synchronized file, sending, by the server, a notification message to the second user equipment, where the notification message carries the information about the to-be-synchronized file, and the notification message is used to instruct the second user equipment to perform a corresponding synchronization operation according to the information about the to-be-synchronized file; and
associatively storing, by the server, the notification message in the historical synchronization information.

According to the fourth possible implementation manner of the first aspect, in a fifth possible implementation manner of the first aspect, the sending, by the server, a notification message to the second user equipment includes:
determining, by the server, whether the second user equipment is online;
if the second user equipment is not online, storing, by the server, the synchronization task message;
receiving, by the server, a get-online request from the second user equipment; and
sending, by the server, the notification message to the second user equipment according to the stored synchronization task message, where the notification message carries the information about the to-be-synchronized file.

With reference to the fourth or the fifth possible implementation manner of the first aspect, in a sixth possible implementation manner of the first aspect, the execution result that is of the synchronization task instruction and carried in the response message is used to indicate that the second user equipment has performed the corresponding synchronization operation according to the information about the to-be-synchronized file.

With reference to any one of the fourth to the sixth possible implementation manners of the first aspect, in a seventh possible implementation manner of the first aspect, after the sending, by the server, a notification message to the second user equipment, the method further includes:
receiving, by the server, a synchronization completion message sent by the second user equipment; and
updating, by the server according to the synchronization completion message, in the historical synchronization information, the historical synchronization operation information corresponding to the to-be-synchronized file.

With reference to the first aspect or the first possible implementation manner of the first aspect, in an eighth possible implementation manner of the first aspect, the synchronization task instruction is a query command; and the execution result that is of the synchronization task instruction and carried in the response message carries the historical synchronization operation information that is corresponding to the to-be-synchronized file and in the historical synchronization information.

With reference to the first aspect or the first possible implementation manner of the first aspect, in a ninth possible implementation manner of the first aspect, the synchronization task instruction is an update command, and the synchronization task message further carries information about a second user equipment; and
after the determining, by the server according to the synchronization task instruction, historical synchronization operation information corresponding to the to-be-synchronized file, in historical synchronization information stored in the server, the method further includes:
updating, by the server according to the information about the second user equipment, in the historical synchronization information, the historical synchronization operation information corresponding to the to-be-synchronized file.

According to the ninth possible implementation manner of the first aspect, in a tenth possible implementation manner of the first aspect, the execution result that is of the synchronization task instruction and carried in the response message is used to indicate that the server has updated, in the historical synchronization information according to the information about the second user equipment, the historical synchronization operation information corresponding to the to-be-synchronized file.

With reference to the first aspect or the first possible implementation manner of the first aspect, in an eleventh possible implementation manner of the first aspect, the synchronization task instruction is a deletion command, and the synchronization task message further carries information about a second user equipment; and
after the determining, by the server according to the synchronization task instruction, historical synchronization operation information corresponding to the to-be-synchronized file, in historical synchronization information stored in the server, the method further includes:
deleting, by the server, from the historical synchronization information, historical synchronization operation information corresponding to the second user equipment in the to-be-synchronized file.

According to the eleventh possible implementation manner of the first aspect, in a twelfth possible implementation manner of the first aspect, the execution result that is of the synchronization task instruction and carried in the response message is used to indicate that the server has deleted, from the historical synchronization information, the historical synchronization operation information corresponding to the second user equipment in the to-be-synchronized file.

With reference to the first aspect or any one of the first to the twelfth possible implementation manners of the first aspect, in a thirteenth possible implementation manner of the first aspect, before the receiving, by a server, a synchronization task message sent by a first user equipment, the method further includes:
receiving, by the server, a registration request sent by the first user equipment, where the registration request carries the information about the first user equipment; and
storing, by the server, the information about the first user equipment in a device list.

With reference to the first aspect or any one of the first to the twelfth possible implementation manners of the first aspect, in a fourteenth possible implementation manner of the first aspect, before the receiving, by a server, a synchronization task message sent by a first user equipment, the method further includes:
receiving, by the server, a device list request message sent by the first user equipment; and
sending, by the server, a device list to the first user equipment, where the device list includes information about at least one user equipment registered with the server.

A second aspect of the present invention provides a data synchronization method, including:
sending, by a first user equipment, a synchronization task message to a server, where the synchronization task message includes: a synchronization task instruction and information about a to-be-synchronized file; and
receiving, by the first user equipment, a response message of the synchronization task message, where the response message is sent by the server and carries an execution result of the synchronization task instruction.

In a first possible implementation manner of the second aspect, the information about the to-be-synchronized file includes a universal resource locator URL corresponding to a storage address of the to-be-synchronized file; or
the information about the to-be-synchronized file includes a URL corresponding to a storage address of the to-be-synchronized file, and further includes a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

With reference to the second aspect or the first possible implementation manner of the second aspect, in a second possible implementation manner of the second aspect, the synchronization task instruction is a creation command, and the synchronization task message further carries information about the first user equipment and information about a second user equipment; and
the execution result that is of the synchronization task instruction and carried in the response message is used to indicate that the server has stored the information about the to-be-synchronized file in the historical synchronization information.

With reference to the second aspect or the first or the second possible implementation manner of the second aspect, in a third possible implementation manner of the second aspect, the synchronization task instruction is the creation command, and the synchronization task message further carries the information about the first user equipment and the information about the second user equipment; and
the execution result that is of the synchronization task instruction and carried in the response message is used to indicate that the second user equipment has performed a corresponding synchronization operation according to the information about the to-be-synchronized file.

With reference to the second aspect or the first possible implementation manner of the second aspect, in a fourth possible implementation manner of the second aspect, the synchronization task instruction is a query command; and
the execution result that is of the synchronization task instruction and carried in the response message carries historical synchronization operation information that is corresponding to the to-be-synchronized file and in the historical synchronization information.

With reference to the second aspect or the first possible implementation manner of the second aspect, in a fifth possible implementation manner of the second aspect, the synchronization task instruction is an update command, and the synchronization task message further carries information about a second user equipment;
the execution result that is of the synchronization task instruction and carried in the response message is used to indicate that the server has updated, in historical synchronization information according to the information about the second user equipment, historical synchronization operation information corresponding to the to-be-synchronized file; and
the first user equipment updates, according to the response message, locally stored historical synchronization operation information corresponding to the to-be-synchronized file.

With reference to the second aspect or the first possible implementation manner of the second aspect, in a sixth possible implementation manner of the second aspect, the synchronization task instruction is a deletion command, and the synchronization task message further carries information about a second user equipment;
the execution result that is of the synchronization task instruction and carried in the response message is used to indicate that the server has deleted, from historical synchronization information, historical synchronization operation information corresponding to the second user equipment in the to-be-synchronized file; and
the first user equipment updates, according to the response message, locally stored historical synchronization operation information corresponding to the to-be-synchronized file.

With reference to the second aspect or any one of the first to the sixth possible implementation manners of the second aspect, in a seventh possible implementation manner of the second aspect, before the sending, by a first user equipment, a synchronization task message to a server, the method further includes:
sending, by the first user equipment, a registration request to the server, where the registration request carries the information about the first user equipment.

With reference to the second aspect or any one of the first to the sixth possible implementation manners of the second aspect, in an eighth possible implementation manner of the second aspect, before the sending, by a first user equipment, a synchronization task message to a server, the method further includes:
sending, by the first user equipment, a device list request message to the server; and
receiving, by the first user equipment, a device list sent by the server, where the device list includes information about at least one user equipment registered with the server.

A third aspect of the present invention provides a server, including:
a first receiving module, configured to receive a synchronization task message sent by a first user equipment, where the synchronization task message includes: a synchronization task instruction and information about a to-be-synchronized file;
a determining module, configured to determine, according to the synchronization task instruction, historical synchronization operation information corresponding to the to-be-synchronized file, in historical synchronization information stored in the server; and
a first sending module, configured to send a response message of the synchronization task message to the first user equipment, where the response message carries an execution result of the synchronization task instruction.

In a first possible implementation manner of the third aspect, the information about the to-be-synchronized file includes a universal resource locator URL corresponding to a storage address of the to-be-synchronized file; or
the information about the to-be-synchronized file includes a URL corresponding to a storage address of the to-be-synchronized file, and further includes a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

With reference to the third aspect or the first possible implementation manner of the third aspect, in a second possible implementation manner of the third aspect, the synchronization task instruction is a creation command, and the synchronization task message further carries information about the first user equipment and information about a second user equipment; and
the server further includes:
a judging module, configured to: after the historical synchronization operation information corresponding to the to-be-synchronized file is determined in the historical synchronization information stored in the server, determine whether the information about the to-be-synchronized file is already stored in the historical synchronization information; and
a first storage module, configured to: if the information about the to-be-synchronized file is not stored in the historical synchronization information, store the information about the to-be-synchronized file in the historical synchronization information.

According to the second possible implementation manner of the third aspect, in a third possible implementation manner of the third aspect, the execution result that is of the synchronization task instruction and carried in the response message is used to indicate that the server has stored the information about the to-be-synchronized file in the historical synchronization information.

With reference to the third aspect or any one of the first to the third possible implementation manners of the third aspect, in a fourth possible implementation manner of the third aspect, the synchronization task instruction is the creation command, and the synchronization task message further carries the information about the first user equipment and the information about the second user equipment;
the determining module is further configured to: after the historical synchronization operation information corresponding to the to-be-synchronized file is determined in the historical synchronization information stored in the server, determine, according to the historical synchronization operation information corresponding to the to-be-synchronized file, that the second user equipment has not performed a synchronization operation on the to-be-synchronized file;
the first sending module is further configured to send a notification message to the second user equipment, where the notification message carries the information about the to-be-synchronized file, and the notification message is used to instruct the second user equipment to perform a corresponding synchronization operation according to the information about the to-be-synchronized file; and the server further includes:
a second storage module, configured to associatively store the notification message in the historical synchronization information.

According to the fourth possible implementation manner of the third aspect, in a fifth possible implementation manner of the third aspect, the determining module is further configured to determine whether the second user equipment is online;
the second storage module is further configured to: if the second user equipment is not online, store the synchronization task message;
the first receiving module is further configured to receive a get-online request from the second user equipment; and
the first sending module is further configured to send, to the second user equipment according to the stored synchronization task message, the notification message carrying the information about the to-be-synchronized file.

With reference to the fourth or the fifth possible implementation manner of the third aspect, in a sixth possible implementation manner of the third aspect, the execution result that is of the synchronization task instruction and carried in the response message is used to indicate that the second user equipment has performed the corresponding synchronization operation according to the information about the to-be-synchronized file.

With reference to any one of the fourth to the sixth possible implementation manners of the third aspect, in a seventh possible implementation manner of the third aspect, the first receiving module is further configured to: after the notification message is sent to the second user equipment, receive a synchronization completion message sent by the second user equipment; and
the server further includes:
a first updating module, configured to update, in the historical synchronization information according to the synchronization completion message, the historical synchronization operation information corresponding to the to-be-synchronized file.

With reference to the third aspect or the first possible implementation manner of the third aspect, in an eighth possible implementation manner of the third aspect, the synchronization task instruction is a query command; and the execution result that is of the synchronization task instruction and carried in the response message carries the historical synchronization operation information that is corresponding to the to-be-synchronized file and in the historical synchronization information.

With reference to the third aspect or the first possible implementation manner of the third aspect, in a ninth possible implementation manner of the third aspect, the synchronization task instruction is an update command, and the synchronization task message further carries information about a second user equipment; and
the server further includes:
a second updating module, configured to: after the historical synchronization operation information corresponding to the to-be-synchronized file is determined in the historical synchronization information stored in the server, update, in the historical synchronization information according to the information about the second user equipment, the historical synchronization operation information corresponding to the to-be-synchronized file.

With reference to the ninth possible implementation manner of the third aspect, in a tenth possible implementation manner of the third aspect, the execution result that is of the synchronization task instruction and carried in the response message is used to indicate that the server has updated, in the historical synchronization information according to the information about the second user equipment, the historical synchronization operation information corresponding to the to-be-synchronized file.

With reference to the third aspect or the first possible implementation manner of the third aspect, in an eleventh possible implementation manner of the third aspect, the synchronization task instruction is a deletion command, and the synchronization task message further carries information about a second user equipment; and
the server further includes:
a deleting module, configured to: after the historical synchronization operation information corresponding to the to-be-synchronized file is determined in the historical synchronization information stored in the server, delete, from the historical synchronization information, historical synchronization operation information corresponding to the second user equipment in the to-be-synchronized file.

According to the eleventh possible implementation manner of the third aspect, in a twelfth possible implementation manner of the third aspect, the execution result that is of the synchronization task instruction and carried in the response message is used to indicate that the server has deleted, from the historical synchronization information, the historical synchronization operation information corresponding to the second user equipment in the to-be-synchronized file.

With reference to the third aspect or any one of the first to the twelfth possible implementation manners of the third aspect, in a thirteenth possible implementation manner of the third aspect, the first receiving module is further configured to: before the server receives the synchronization task message sent by the first user equipment, receive a registration request sent by the first user equipment, where the registration request carries the information about the first user equipment; and the server further includes:
a third storage module, configured for the server to store the information about the first user equipment in a device list.

With reference to the third aspect or any one of the first to the twelfth possible implementation manners of the third aspect, in a fourteenth possible implementation manner of the third aspect, the first receiving module is further configured to: before the server receives the synchronization task message sent by the first user equipment, receive a device list request message sent by the first user equipment; and
the first sending module is further configured to send a device list to the first user equipment, where the device list includes information about at least one user equipment registered with the server.

A fourth aspect of the present invention provides a user equipment, including:
a second sending module, configured to send a synchronization task message to a server, where the synchronization task message includes: a synchronization task instruction and information about a to-be-synchronized file; and
a second receiving module, configured to receive a response message of the synchronization task message, where the response message is sent by the server and carries an execution result of the synchronization task instruction.

In a first possible implementation manner of the fourth aspect, the information about the to-be-synchronized file includes a universal resource locator URL corresponding to a storage address of the to-be-synchronized file; or
the information about the to-be-synchronized file includes a URL corresponding to a storage address of the to-be-synchronized file, and further includes a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

With reference to the fourth aspect or the first possible implementation manner of the fourth aspect, in a second possible implementation manner of the fourth aspect, the synchronization task instruction is a creation command, and the synchronization task message further carries information about the first user equipment and information about a second user equipment; and
the execution result that is of the synchronization task instruction and carried in the response message is used to indicate that the server has stored the information about the to-be-synchronized file in the historical synchronization information.

With reference to the fourth aspect or the first or the second possible implementation manner of the fourth aspect, in a third possible implementation manner of the fourth aspect, the synchronization task instruction is the creation command, and the synchronization task message further carries the information about the first user equipment and the information about the second user equipment; and
the execution result that is of the synchronization task instruction and carried in the response message is used to indicate that the second user equipment has performed a corresponding synchronization operation according to the information about the to-be-synchronized file.

With reference to the fourth aspect or the first possible implementation manner of the fourth aspect, in a fourth possible implementation manner of the fourth aspect, the synchronization task instruction is a query command; and
the execution result that is of the synchronization task instruction and carried in the response message carries historical synchronization operation information that is corresponding to the to-be-synchronized file and in historical synchronization information.

With reference to the fourth aspect or the first possible implementation manner of the fourth aspect, in a fifth possible implementation manner of the fourth aspect, the synchronization task instruction is an update command, and the synchronization task message further carries information about a second user equipment;
the execution result that is of the synchronization task instruction and carried in the response message is used to indicate that the server has updated, in historical synchronization information according to the information about the second user equipment, historical synchronization operation information corresponding to the to-be-synchronized file; and
the user equipment further includes:
a third updating module, configured to update, according to the response message, locally stored historical synchronization operation information corresponding to the to-be-synchronized file.

With reference to the fourth aspect or the first possible implementation manner of the fourth aspect, in a sixth possible implementation manner of the fourth aspect, the synchronization task instruction is a deletion command, and the synchronization task message further carries information about a second user equipment;
the execution result that is of the synchronization task instruction and carried in the response message is used to indicate that the server has deleted, from historical synchronization information, historical synchronization operation information corresponding to the second user equipment in the to-be-synchronized file; and
the user equipment further includes:
a fourth updating module, configured to update, according to the response message, locally stored historical synchronization operation information corresponding to the to-be-synchronized file.

With reference to the fourth aspect or any one of the first to the sixth possible implementation manners of the fourth aspect, in a seventh possible implementation manner of the fourth aspect, the second sending module is further configured to: before the first user equipment sends the synchronization task message to the server, send a registration request to the server, where the registration request carries the information about the first user equipment.

With reference to the fourth aspect or any one of the first to the sixth possible implementation manners of the fourth aspect, in an eighth possible implementation manner of the fourth aspect, the second sending module is further configured to: before the first user equipment sends the synchronization task message to the server, send a device list request message to the server; and
the second receiving module is further configured to receive a device list sent by the server, where the device list includes information about at least one user equipment registered with the server.

According to the data synchronization method and the device provided in the embodiments of the present invention, a server receives a synchronization task message sent by a first user equipment, where the synchronization task message includes a synchronization task instruction and information about a to-be-synchronized file; the server determines, according to the synchronization task instruction, historical synchronization operation information corresponding to the to-be-synchronized file, in historical synchronization information stored in the server; and the server sends a response message of the synchronization task message to the first user equipment, where the response message carries an execution result of the synchronization task instruction. In this way, it can be implemented that a server controls data synchronization between user equipments according to historical synchronization information, thereby avoiding repeated file synchronization and improving a utilization rate of a device resource.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of Embodiment 1 of a data synchronization method according to the present invention;
FIG. 2 is a flowchart of Embodiment 2 of a data synchronization method according to the present invention;
FIG. 3A and FIG. 3B are a flowchart of Embodiment 3 of a data synchronization method according to the present invention;
FIG. 4 is a flowchart of Embodiment 5 of a data synchronization method according to the present invention;
FIG. 5 is a flowchart of Embodiment 6 of a data synchronization method according to the present invention;
FIG. 6 is a flowchart of Embodiment 7 of a data synchronization method according to the present invention;
FIG. 7 is a flowchart of Embodiment 8 of a data synchronization method according to the present invention;
FIG. 8 is a flowchart of Embodiment 10 of a data synchronization method according to the present invention;
FIG. 9 is a flowchart of Embodiment 11 of a data synchronization method according to the present invention;
FIG. 10 is a flowchart of Embodiment 12 of a data synchronization method according to the present invention;
FIG. 11 is a flowchart of Embodiment 13 of a data synchronization method according to the present invention;
FIG. 12 is a flowchart of Embodiment 14 of a data synchronization method according to the present invention;
FIG. 13 is a schematic structural diagram of Embodiment 1 of a server according to the present invention;
FIG. 14 is a schematic structural diagram of Embodiment 2 of a server according to the present invention;
FIG. 15 is a schematic structural diagram of Embodiment 3 of a server according to the present invention;
FIG. 16 is a schematic structural diagram of Embodiment 5 of a server according to the present invention;
FIG. 17 is a schematic structural diagram of Embodiment 6 of a server according to the present invention;
FIG. 18 is a schematic structural diagram of Embodiment 7 of a server according to the present invention;
FIG. 19 is a schematic structural diagram of Embodiment 1 of a user equipment according to the present invention;
FIG. 20 is a schematic structural diagram of Embodiment 3 of a user equipment according to the present invention;
FIG. 21 is a schematic structural diagram of Embodiment 4 of a user equipment according to the present invention; and
FIG. 22 is a schematic structural diagram of Embodiment 6 of a user equipment according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

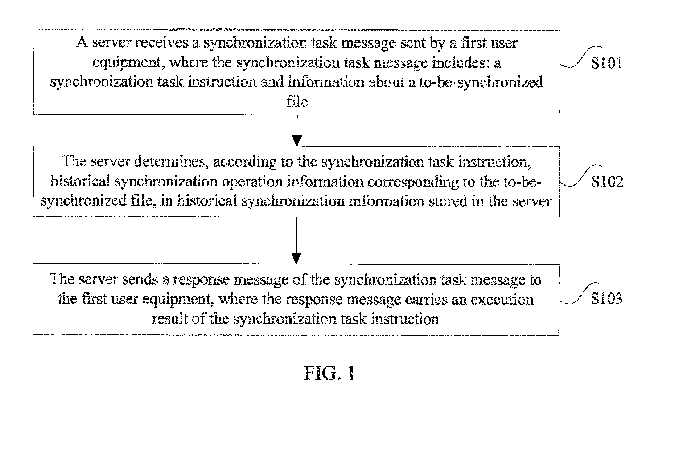

FIG. 1 is a flowchart of Embodiment 1 of a data synchronization method according to the present invention. As shown in FIG. 1, the data synchronization method of the embodiment includes:

S101. A server receives a synchronization task message sent by a first user equipment, where the synchronization task message includes: a synchronization task instruction and information about a to-be-synchronized file.

For example, the embodiment may be applied to a scenario in which various user equipments in a home internal network or a local area network share a resource; however, the embodiment of the present invention is not limited to this scenario. The server may be an intelligent set-top box; the server may be independently disposed, or may be disposed along with a user equipment in the network in an integrated manner. The server is responsible for connecting each user equipment. The first user equipment may include but is not limited to a mobile phone, a personal digital assistant (Personal Digital Assistant, PDA for short), a wireless handheld equipment, a wireless netbook, a portable computer, an MP3 player, an MP4 player, a television set, a personal computer (Personal Computer, PC for short), and the like. The server may communicate with each user equipment by using wireless fidelity (Wireless Fidelity, WiFi for short). The present invention does not limit a communication manner between the server and each user equipment. The server stores synchronization operation information of each user equipment. When initiating a synchronization task, the first user equipment sends a synchronization task message to the server, where the synchronization task message may include: a synchronization task instruction and information about a to-be-synchronized file, and the synchronization task instruction may include a creation operation instruction, a query operation instruction, an update operation instruction, a deletion operation instruction, and the like, and is used to indicate to the server an operation type of a synchronization task. The first user equipment may encapsulate the synchronization task instruction and the information about the to-be-synchronized file into the synchronization task message, and send the synchronization task message to the server.

Optionally, the information about the to-be-synchronized file includes a universal resource locator (Universal Resource Locator, URL for short) corresponding to a storage address of the to-be-synchronized file; or
the information about the to-be-synchronized file includes a URL corresponding to a storage address of the to-be-synchronized file, and further includes a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

A file type includes data types such as image, video, audio, and document; a synchronization status may be set to a synchronization waiting state, a synchronization paused state or a synchronization scheduled state; and a synchronization priority indicates order of priority for file synchronization.

S102. The server determines, according to the synchronization task instruction, historical synchronization operation information corresponding to the to-be-synchronized file, in historical synchronization information stored in the server.

Specifically, after receiving the synchronization task message, the server may parse the synchronization task message according to a preset synchronization task message parsing specification, so as to determine the synchronization task instruction and the information about the to-be-synchronized file. The server may determine, according to an operation type corresponding to the synchronization task instruction, the historical synchronization operation information corresponding to the to-be-synchronized file, in the historical synchronization information stored in the server. If the historical synchronization information stored in the server does not include the historical synchronization operation information corresponding to the to-be-synchronized file, the server may first store the received information about the to-be-synchronized file, in the historical synchronization information, and then perform an operation corresponding to the synchronization task instruction. If the historical synchronization information stored in the server includes the historical synchronization operation information corresponding to the to-be-synchronized file, the server performs, according to the historical synchronization operation information corresponding to the to-be-synchronized file, an operation corresponding to the synchronization task instruction.

S103. The server sends a response message of the synchronization task message to the first user equipment, where the response message carries an execution result of the synchronization task instruction.

Specifically, after performing the operation corresponding to the synchronization task instruction, the server may send the response message of the synchronization task message to the first user equipment. After receiving the response message, the first user equipment may update historical synchronization information stored in the user equipment.

The foregoing synchronization task message and response message may be sent in an Extensible Markup Language (Extensible Markup Language, XML for short) form.

When user equipments in a network system need to synchronize data, a user equipment in the network system may send a synchronization task message to a server in which historical synchronization information in the network system is recorded, and the server stores or updates historical synchronization information corresponding to a to-be-synchronized file. In this way, it can be implemented that the server records the historical synchronization information used for data synchronization between the user equipments in the network system, thereby avoiding a problem of repeated file synchronization that may exist in the prior art and improving a utilization rate of a device resource.

According to the data synchronization method provided in the embodiment, a server receives a synchronization task message sent by a first user equipment, where the synchronization task message includes a synchronization task instruction and information about a to-be-synchronized file; the server determines, according to the synchronization task instruction, historical synchronization operation information corresponding to the to-be-synchronized file, in historical synchronization information stored in the server; and the server sends a response message of the synchronization task message to the first user equipment, where the response message carries an execution result of the synchronization task instruction. In this way, it can be implemented that a server controls data synchronization between user equipments according to historical synchronization information, thereby avoiding repeated file synchronization and improving a utilization rate of a device resource.

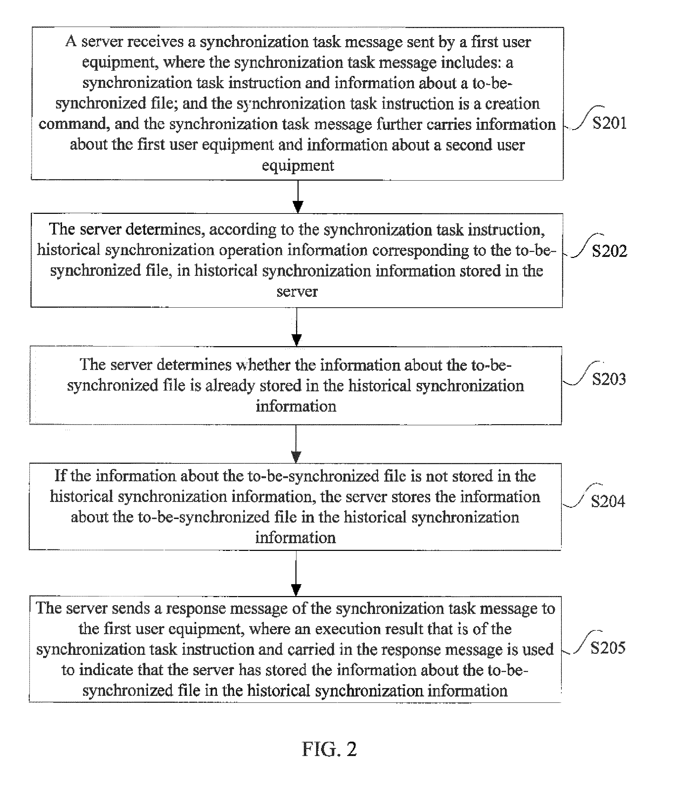

FIG. 2 is a flowchart of Embodiment 2 of a data synchronization method according to the present invention. As shown in FIG. 2, a scenario of the embodiment is as follows: A synchronization task instruction is a creation command; after receiving a synchronization task message sent by a first user equipment, a server determines whether information about a to-be-synchronized file is stored in historical synchronization information; if the information about the to-be-synchronized file is stored in the historical synchronization information, the information about the to-be-synchronized file is not repeatedly created. The data synchronization method of the embodiment includes:

S201. A server receives a synchronization task message sent by a first user equipment, where the synchronization task message includes: a synchronization task instruction and information about a to-be-synchronized file; and the synchronization task instruction is a creation command, and the synchronization task message further carries information about the first user equipment and information about a second user equipment.

Specifically, the creation command is used to indicate a creation synchronization task; in addition to the synchronization task instruction and the information about the to-be-synchronized file, the synchronization task message further carries the information about the first user equipment and the information about the second user equipment, where the equipment information may include information such as an equipment name, an equipment ID, an equipment IP address, an equipment type, and an equipment online status.

S202. The server determines, according to the synchronization task instruction, historical synchronization operation information corresponding to the to-be-synchronized file, in historical synchronization information stored in the server.

S203. The server determines whether the information about the to-be-synchronized file is already stored in the historical synchronization information.

S204. If the information about the to-be-synchronized file is not stored in the historical synchronization information, the server stores the information about the to-be-synchronized file in the historical synchronization information.

Specifically, if the information about the to-be-synchronized file is not stored in the historical synchronization information, the server stores the information about the to-be-synchronized file in the historical synchronization information; if the information about the to-be-synchronized file is stored in the historical synchronization information, the information about the to-be-synchronized file is not repeatedly created; if the information about the to-be-synchronized file is stored in the historical synchronization information, but a synchronization operation has been performed, related information such as the historic synchronization information and a synchronization status may be updated.

S205. The server sends a response message of the synchronization task message to the first user equipment, where an execution result that is of the synchronization task instruction and carried in the response message is used to indicate that the server has stored the information about the to-be-synchronized file in the historical synchronization information.

According to the data synchronization method provided in the embodiment, a server receives a synchronization task message sent by a first user equipment, where the synchronization task message includes a creation command and information about a to-be-synchronized file; the server determines, according to a synchronization task instruction, historical synchronization operation information corresponding to the to-be-synchronized file, in historical synchronization information stored in the server; if the information about the to-be-synchronized file is not stored in the historical synchronization information, the server stores the information about the to-be-synchronized file in the historical synchronization information, and then sends a response message of the synchronization task message to the first user equipment, where an execution result that is of the synchronization task instruction and carried in the response message is used to indicate that the server has stored the information about the to-be-synchronized file in the historical synchronization information. In this way, it can be implemented that a server controls data synchronization between user equipments according to historical synchronization information, thereby avoiding repeated file synchronization and improving a utilization rate of a device resource.

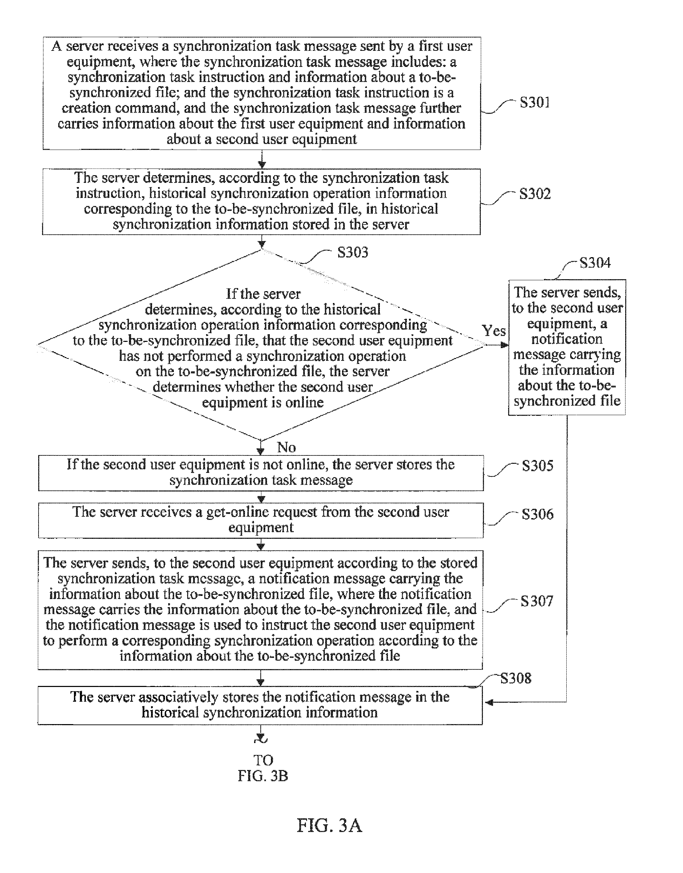

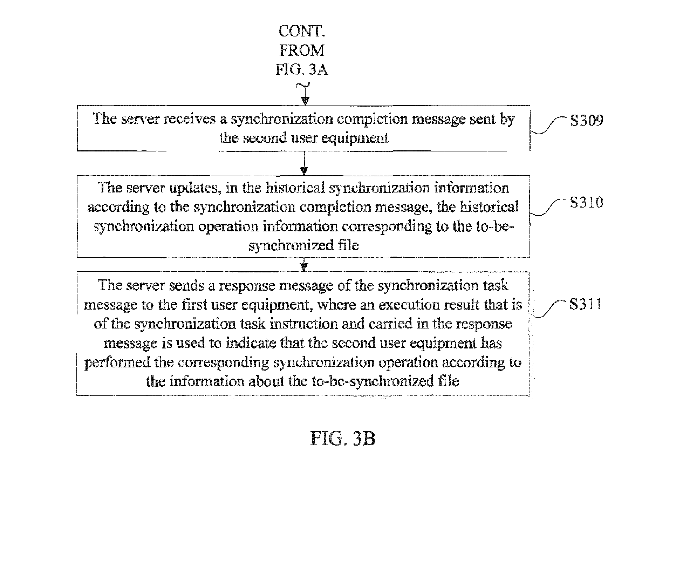

FIG. 3A and FIG. 3B are a flowchart of Embodiment 3 of a data synchronization method according to the present invention. As shown in FIG. 3A and FIG. 3B, a scenario of the embodiment is as follows: A synchronization task instruction is a creation command; after receiving a synchronization task message sent by a first user equipment, a server determines whether a second user equipment is online; if the second user equipment is online or gets online, the server instructs the second user equipment to perform a synchronization operation. The data synchronization method of the embodiment includes:

S301. A server receives a synchronization task message sent by a first user equipment, where the synchronization task message includes: a synchronization task instruction and information about a to-be-synchronized file; and the synchronization task instruction is a creation command, and the synchronization task message further carries information about the first user equipment and information about a second user equipment.

Specifically, the creation command is used to indicate a creation synchronization task; in addition to the synchronization task instruction and the information about the to-be-synchronized file, the synchronization task message further carries the information about the first user equipment and the information about the second user equipment, where the equipment information may include information such as an equipment name, an equipment ID, an equipment IP address, an equipment type, and an equipment online status.

S302. The server determines, according to the synchronization task instruction, historical synchronization operation information corresponding to the to-be-synchronized file, in historical synchronization information stored in the server.

S303. If the server determines, according to the historical synchronization operation information corresponding to the to-be-synchronized file, that the second user equipment has not performed a synchronization operation on the to-be-synchronized file, the server determines whether the second user equipment is online; if the second user equipment is online, S304 is executed; if the second user equipment is not online, S305 is executed.

Specifically, after receiving the synchronization task message that includes the creation command instruction, the server determines that the second user equipment has not performed a synchronization operation on the to-be-synchronized file; if the second user equipment is online, the server sends, to the second user equipment, a notification message carrying the information about the to-be-synchronized file; if the second user equipment is not online, the server first stores the synchronization task message, and after the second user equipment gets online, sends a notification message to the second user equipment.

S304. The server sends, to the second user equipment, a notification message carrying the information about the to-be-synchronized file.

S305. If the second user equipment is not online, the server stores the synchronization task message.

S306. The server receives a get-online request from the second user equipment.

S307. The server sends, to the second user equipment according to the stored synchronization task message, a notification message carrying the information about the to-be-synchronized file, where the notification message carries the information about the to-be-synchronized file, and the notification message is used to instruct the second user equipment to perform a corresponding synchronization operation according to the information about the to-be-synchronized file.

After receiving the notification message, the second user equipment may obtain the information about the to-be-synchronized file by parsing the notification message. If same synchronization task information is not stored in historical synchronization information of the second user equipment, a synchronization task is placed in a queue for downloading of the file. If a same synchronization task record is stored in the historical synchronization information of the second user equipment and the file has been downloaded, synchronization can be performed again for downloading of the file; if the same synchronization task is downloading or waiting for downloading the file, the historical synchronization information of the user equipment does not need to be updated. If the synchronization task has started to download the file, a multi-thread execution function may be used, and one or more threads may be dynamically set to download the file simultaneously in a resumable manner. The downloading of the to-be-synchronized file may refer to that the second user equipment establishes, according to a URL of the to-be-synchronized file, a connection to a user equipment in which the to-be-synchronized file is located, receives content of the file, and writes the content of the file locally. A synchronous receiving channel has the multi-thread execution function, and may use the multi-thread resumable downloading manner according to a requirement.

It can be understood that in addition to the foregoing file downloading, the corresponding synchronization operation performed by the second user equipment according to the information about the to-be-synchronized file may further include that the second user equipment performs according to the synchronization task information, an uploading operation such as uploading the to-be-synchronized file to, for example, a sharing unit on a cloud platform.

S308. The server associatively stores the notification message in the historical synchronization information.

S309. The server receives a synchronization completion message sent by the second user equipment.

S310. The server updates, in the historical synchronization information according to the synchronization completion message, the historical synchronization operation information corresponding to the to-be-synchronized file.

S311. The server sends a response message of the synchronization task message to the first user equipment, where an execution result that is of the synchronization task instruction and carried in the response message is used to indicate that the second user equipment has performed the corresponding synchronization operation according to the information about the to-be-synchronized file.

In the data synchronization method provided in the embodiment, a synchronization task can also be created for a user equipment that is not online. When the user equipment is not online, the server first stores the synchronization task message, and when the user equipment gets online, sends the synchronization task message to the user equipment, so as to complete data synchronization. As a synchronization task storage and forwarding center, the server supports a complete file synchronization function between multiple user equipments, thereby extending a service scenario in comparison to the prior art.

According to the data synchronization method provided in the embodiment, a server receives a synchronization task message sent by a first user equipment, where the synchronization task message includes a creation command and information about a to-be-synchronized file; the server determines, according to a synchronization task instruction, historical synchronization operation information corresponding to the to-be-synchronized file, in historical synchronization information stored in the server; if the server determines, according to the historical synchronization operation information corresponding to the to-be-synchronized file, that a second user equipment has not performed a synchronization operation on the to-be-synchronized file, the server determines whether the second user equipment is online; if the second user equipment is online, the server sends, to the second user equipment, a notification message carrying the information about the to-be-synchronized file; if the second user equipment is not online, the server first stores the synchronization task message, and after the second user equipment gets online, sends the notification message to the second user equipment; after the second equipment completes the synchronization operation, the server sends a response message of the synchronization task message to the first user equipment, where an execution result that is of the synchronization task instruction and carried in the response message is used to indicate that the second user equipment has performed a corresponding synchronization operation according to the information about the to-be-synchronized file. In this way, it can be implemented that a server controls data synchronization between user equipments according to historical synchronization information, thereby avoiding repeated file synchronization and improving a utilization rate of a device resource; and it can be also implemented that a synchronization task is created for a user equipment that is not online.

On a basis of the embodiment shown in FIG. 1, a scenario of Embodiment 4 of a data synchronization method according to the present invention is as follows: A first user equipment needs to query historical synchronization information of a file, and sends a file synchronization message to a server; and the server sends historical synchronization operation information corresponding to the to-be-synchronized file to the first user equipment, where the historical synchronization operation information that is obtained by querying and in historical synchronization information, where a synchronization task instruction is a query command, and an execution result that is of the synchronization task instruction and carried in a response message carries the historical synchronization operation information that is corresponding to the to-be-synchronized file and in the historical synchronization information.

Specifically, information about a second user equipment may not need to be indicated according to an actual situation, so that all historical synchronization information of the to-be-synchronized file can be obtained by querying, and all query results may be packed into an XML document and fed back to the first user equipment as a data package.

In the data synchronization method provided in the embodiment, a user equipment can obtain, by querying, all historical synchronization information of a to-be-synchronized file on the server, thereby further avoiding a problem of repeated file synchronization that may exist in the prior art and improving a utilization rate of a device resource.

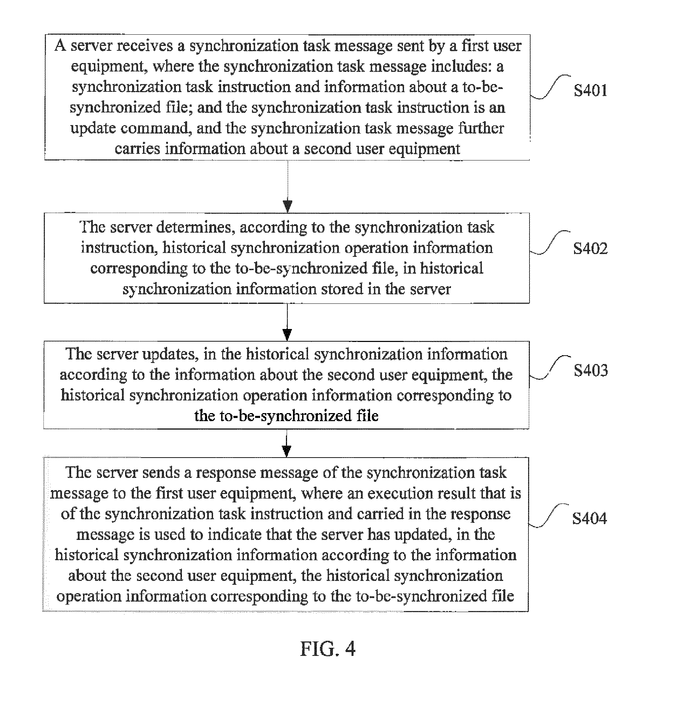

FIG. 4 is a flowchart of Embodiment 5 of a data synchronization method according to the present invention. As shown in FIG. 4, a scenario of the embodiment is as follows: A synchronization task instruction is an update command; and a first user equipment instructs a server to update, in historical synchronization information according to information about a second user equipment, historical synchronization operation information corresponding to a to-be-synchronized file. The data synchronization method of the embodiment includes:

S401. A server receives a synchronization task message sent by a first user equipment, where the synchronization task message includes: a synchronization task instruction and information about a to-be-synchronized file; and the synchronization task instruction is an update command, and the synchronization task message further carries information about a second user equipment.

S402. The server determines, according to the synchronization task instruction, historical synchronization operation information corresponding to the to-be-synchronized file, in historical synchronization information stored in the server.

S403. The server updates, in the historical synchronization information according to the information about the second user equipment, the historical synchronization operation information corresponding to the to-be-synchronized file.

S404. The server sends a response message of the synchronization task message to the first user equipment, where an execution result that is of the synchronization task instruction and carried in the response message is used to indicate that the server has updated, in the historical synchronization information according to the information about the second user equipment, the historical synchronization operation information corresponding to the to-be-synchronized file.

According to the data synchronization method provided in the embodiment, a server receives a synchronization task message sent by a first user equipment, where the synchronization task message includes an update command and information about a to-be-synchronized file; the server updates, in historical synchronization information according to a synchronization task instruction and information about a second user equipment, historical synchronization operation information corresponding to the to-be-synchronized file, and then sends a response message of the synchronization task message to the first user equipment, where an execution result that is of the synchronization task instruction and carried in the response message is used to indicate that the server has updated, in the historical synchronization information according to the information about the second user equipment, the historical synchronization operation information corresponding to the to-be-synchronized file. In this way, it can be implemented that a server controls data synchronization between user equipments according to historical synchronization information, thereby avoiding repeated file synchronization and improving a utilization rate of a device resource.

It can be understood that if a status of the to-be-synchronized file in the first user equipment or the second user equipment changes, a synchronization task message that includes an update command and a message of the to-be-synchronized file may be sent to the server, so that the server updates the historical synchronization operation information corresponding to the to-be-synchronized file.

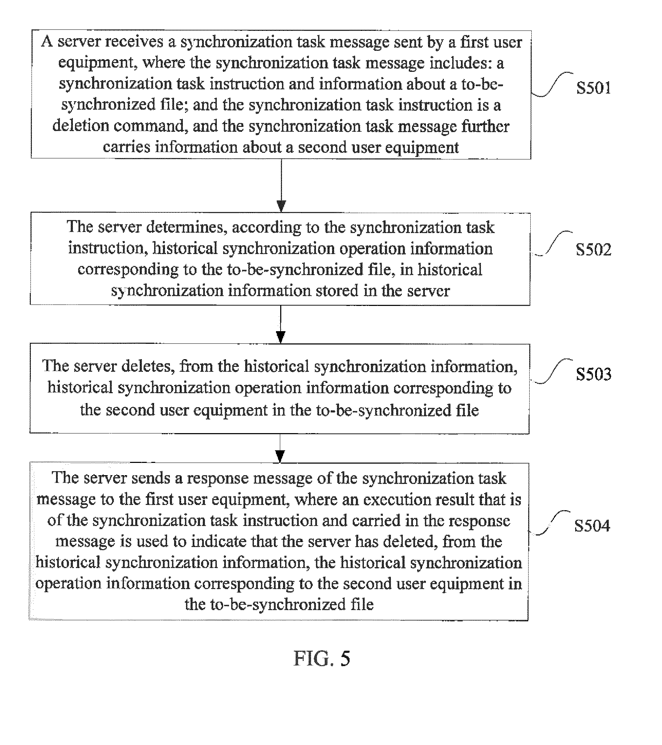

FIG. 5 is a flowchart of Embodiment 6 of a data synchronization method according to the present invention. As shown in FIG. 5, a scenario of the embodiment is as follows: A synchronization task instruction is a deletion command; and a first user equipment instructs a server to delete, from historical synchronization information according to information about a second user equipment, historical synchronization operation information corresponding to a to-be-synchronized file. The data synchronization method of the embodiment includes:

S501. A server receives a synchronization task message sent by a first user equipment, where the synchronization task message includes: a synchronization task instruction and information about a to-be-synchronized file; and the synchronization task instruction is a deletion command, and the synchronization task message further carries information about a second user equipment.

S502. The server determines, according to the synchronization task instruction, historical synchronization operation information corresponding to the to-be-synchronized file, in historical synchronization information stored in the server.

S503. The server deletes, from the historical synchronization information, historical synchronization operation information corresponding to the second user equipment in the to-be-synchronized file.

S504. The server sends a response message of the synchronization task message to the first user equipment, where an execution result that is of the synchronization task instruction and carried in the response message is used to indicate that the server has deleted, from the historical synchronization information, the historical synchronization operation information corresponding to the second user equipment in the to-be-synchronized file.

According to the data synchronization method provided in the embodiment, a server receives a synchronization task message sent by a first user equipment, where the synchronization task message includes a deletion command and information about a to-be-synchronized file; the server deletes, from historical synchronization information according to a synchronization task instruction, historical synchronization operation information corresponding to the second user equipment in the to-be-synchronized file, and then sends a response message of the synchronization task message to the first user equipment, where an execution result that is of the synchronization task instruction and carried in the response message is used to indicate that the server has deleted, from the historical synchronization information, the historical synchronization operation information corresponding to the second user equipment in the to-be-synchronized file. In this way, it can be implemented that a server controls data synchronization between user equipments according to historical synchronization information, thereby avoiding repeated file synchronization and improving a utilization rate of a device resource.

It can be understood that if the first user equipment or the second user equipment deletes a to-be-synchronized file, a synchronization task message that includes a deletion command and information about the to-be-synchronized file may be sent to the server, so that the server updates historical synchronization operation information corresponding to the to-be-synchronized file to a deleted state.

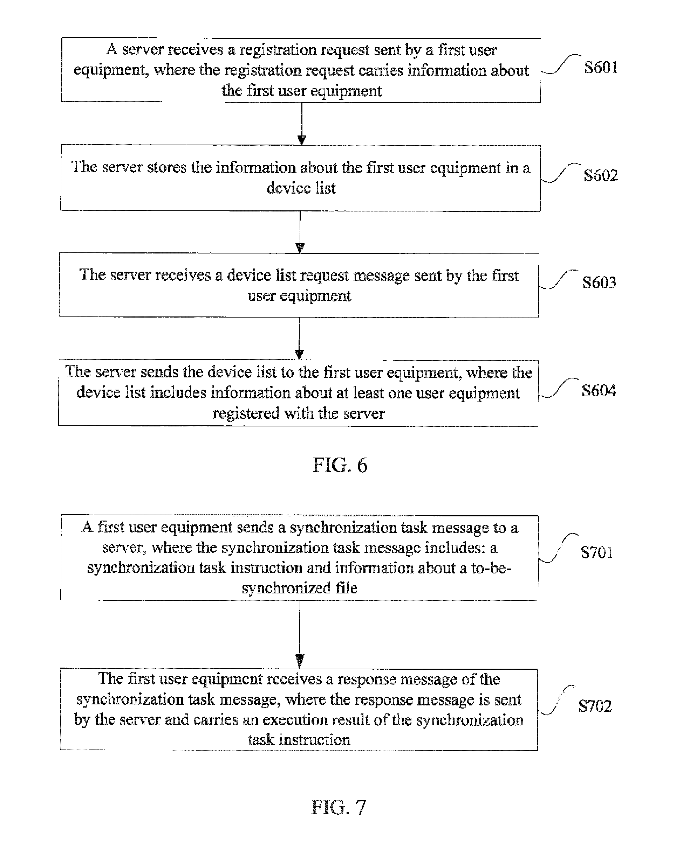

FIG. 6 is a flowchart of Embodiment 7 of a data synchronization method according to the present invention. As shown in FIG. 6, a scenario of the embodiment is as follows: A server is initialized, and collects and buffers information about all registered user equipments; and a first user equipment needs to learn about device list information of a network before creating a synchronization task. On a basis of the embodiment shown in FIG. 1, the data synchronization method of the embodiment includes:

S601. A server receives a registration request sent by a first user equipment, where the registration request carries information about the first user equipment.

Specifically, the server is initialized, and collects and buffers information about all registered user equipments, where a message of a user equipment include at least a device name, a device ID, a device IP address, a device type, a device online state, and the like.

S602. The server stores the information about the first user equipment in a device list.

S603. The server receives a device list request message sent by the first user equipment.

S604. The server sends the device list to the first user equipment, where the device list includes information about at least one user equipment registered with the server.

According to the data synchronization method provided in the embodiment, a server receives a registration request sent by a user equipment, stores information about a first user equipment in a device list; and then receives a device list request message sent by the first user equipment, and sends the device list to the first user equipment, so as to ensure a communication connection between a user equipment and a server in a home private network or a local area network, and ensure that the user equipment can be automatically discovered after getting online.

FIG. 7 is a flowchart of Embodiment 8 of a data synchronization method according to the present invention. As shown in FIG. 7, the data synchronization method of the embodiment includes:

S701. A first user equipment sends a synchronization task message to a server, where the synchronization task message includes: a synchronization task instruction and information about a to-be-synchronized file.

Optionally, the information about the to-be-synchronized file includes a universal resource locator URL corresponding to a storage address of the to-be-synchronized file; or
the information about the to-be-synchronized file includes a URL corresponding to a storage address of the to-be-synchronized file, and further includes a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

S702. The first user equipment receives a response message of the synchronization task message, where the response message is sent by the server and carries an execution result of the synchronization task instruction.

The foregoing synchronization task message and response message may be sent in an XML form.

When user equipments in a network system need to synchronize data between each other, a first user equipment in the network system may send a synchronization task message to a server in which historical synchronization information of the network system is recorded, and the server stores or updates historical synchronization information corresponding to a to-be-synchronized file. In this way, it can be implemented that a server controls data synchronization between user equipments according to historical synchronization information, thereby avoiding repeated file synchronization and improving a utilization rate of a device resource.

According to the data synchronization method provided in the embodiment, a first user equipment sends a synchronization task message to a server, where the synchronization task message includes: a synchronization task instruction and information about a to-be-synchronized file; and then receives a response message of the synchronization task message, where the response message is sent by the server and carries an execution result of the synchronization task instruction. In this way, it can be implemented that a server controls data synchronization between user equipments according to historical synchronization information, thereby avoiding repeated file synchronization and improving a utilization rate of a device resource.

On a basis of the embodiment shown in FIG. 7, a scenario of Embodiment 9 of the data synchronization method provided in the present invention is as follows: A synchronization task instruction is a creation command, and then a synchronization task message further carries information about a first user equipment and information about a second user equipment; and
an execution result that is of the synchronization task instruction and carried in a response message is used to indicate that a server has stored information about a to-be-synchronized file in historical synchronization information.

The synchronization task instruction is the creation command, and then the synchronization task message further carries the information about the first user equipment and the information about the second user equipment; and
the execution result that is of the synchronization task instruction and carried in the response message is used to indicate that the second user equipment has performed a corresponding synchronization operation according to the information about the to-be-synchronized file.

The synchronization task instruction is a query command; and
an execution result that is of the synchronization task instruction and carried in a response message carries historical synchronization operation information that is corresponding to the to-be-synchronized file and in historical synchronization information.

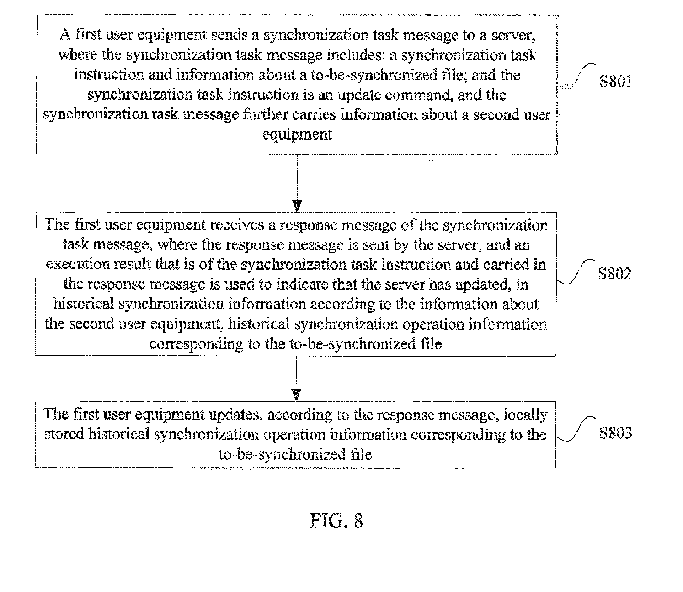

FIG. 8 is a flowchart of Embodiment 10 of a data synchronization method according to the present invention. As shown in FIG. 8, a scenario of the embodiment is as follows: A synchronization task instruction is an update command; and a first user equipment instructs a server to update, according to information about a second user equipment, historical synchronization operation information corresponding to a to-be-synchronized file in historical synchronization information. The data synchronization method of the embodiment includes:

S801. A first user equipment sends a synchronization task message to a server, where the synchronization task message includes: a synchronization task instruction and information about a to-be-synchronized file; and the synchronization task instruction is an update command, and the synchronization task message further carries information about a second user equipment.

S802. The first user equipment receives a response message of the synchronization task message, where the response message is sent by the server, and an execution result that is of the synchronization task instruction and carried in the response message is used to indicate that the server has updated, in historical synchronization information according to the information about the second user equipment, historical synchronization operation information corresponding to the to-be-synchronized file.

S803. The first user equipment updates, according to the response message, locally stored historical synchronization operation information corresponding to the to-be-synchronized file.

The first user equipment updates the locally stored historical synchronization operation information corresponding to the to-be-synchronized file, thereby further avoiding a problem of repeated file synchronization that may exist in the prior art and improving a utilization rate of a device resource.

According to the data synchronization method provided in the embodiment, a first user equipment sends a synchronization task message to a server, where the synchronization task message includes: a synchronization task instruction and information about a to-be-synchronized file, the synchronization task instruction is an update command, and the synchronization task message further carries information about a second user equipment; and then the first user equipment receives a response message of the synchronization task message, where the response message is sent by the server, and an execution result that is of the synchronization task instruction and carried in the response message is used to indicate that the server has updated, in historical synchronization information according to the information about the second user equipment, historical synchronization operation information corresponding to the to-be-synchronized file. In this way, it can be implemented that a server controls data synchronization between user equipments according to historical synchronization information, thereby avoiding repeated file synchronization and improving a utilization rate of a device resource.

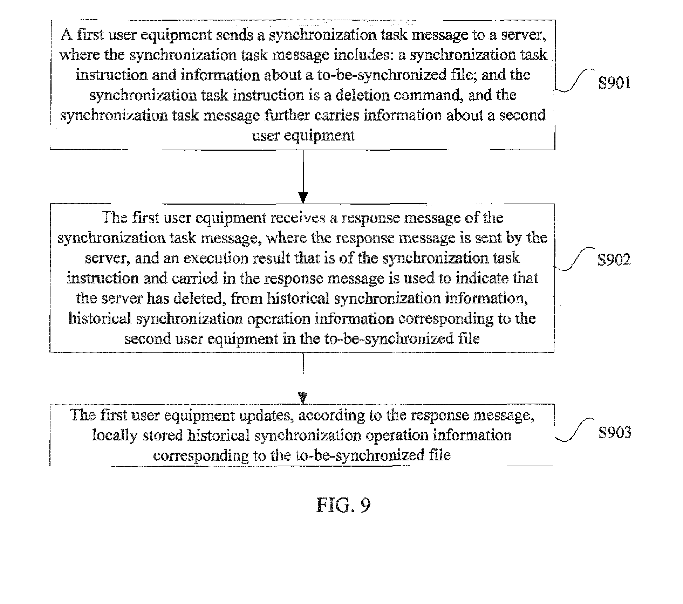

FIG. 9 is a flowchart of Embodiment 11 of a data synchronization method according to the present invention. As shown in FIG. 9, a scenario of the embodiment is as follows: A synchronization task instruction is a deletion command; and a first user equipment instructs a server to delete, from historical synchronization information according to information about a second user equipment, historical synchronization operation information corresponding to a to-be-synchronized file. The data synchronization method of the embodiment includes:

S901. A first user equipment sends a synchronization task message to a server, where the synchronization task message includes: a synchronization task instruction and information about a to-be-synchronized file; and the synchronization task instruction is a deletion command, and the synchronization task message further carries information about a second user equipment.

S902. The first user equipment receives a response message of the synchronization task message, where the response message is sent by the server, and an execution result that is of the synchronization task instruction and carried in the response message is used to indicate that the server has deleted, from historical synchronization information, historical synchronization operation information corresponding to the second user equipment in the to-be-synchronized file.

S903. The first user equipment updates, according to the response message, locally stored historical synchronization operation information corresponding to the to-be-synchronized file.

According to the data synchronization method provided in the embodiment, a first user equipment sends a synchronization task message to a server, where the synchronization task message includes: a synchronization task instruction and information about a to-be-synchronized file, the synchronization task instruction is a deletion command, and the synchronization task message further carries information about a second user equipment; and then the first user equipment receives a response message of the synchronization task message, where the response message is sent by the server, and an execution result that is of the synchronization task instruction and carried in the response message is used to indicate that the server has deleted, from historical synchronization information, historical synchronization operation information corresponding to the second user equipment in the to-be-synchronized file. In this way, it can be implemented that a server controls data synchronization between user equipments according to historical synchronization information, thereby avoiding repeated file synchronization and improving a utilization rate of a device resource.

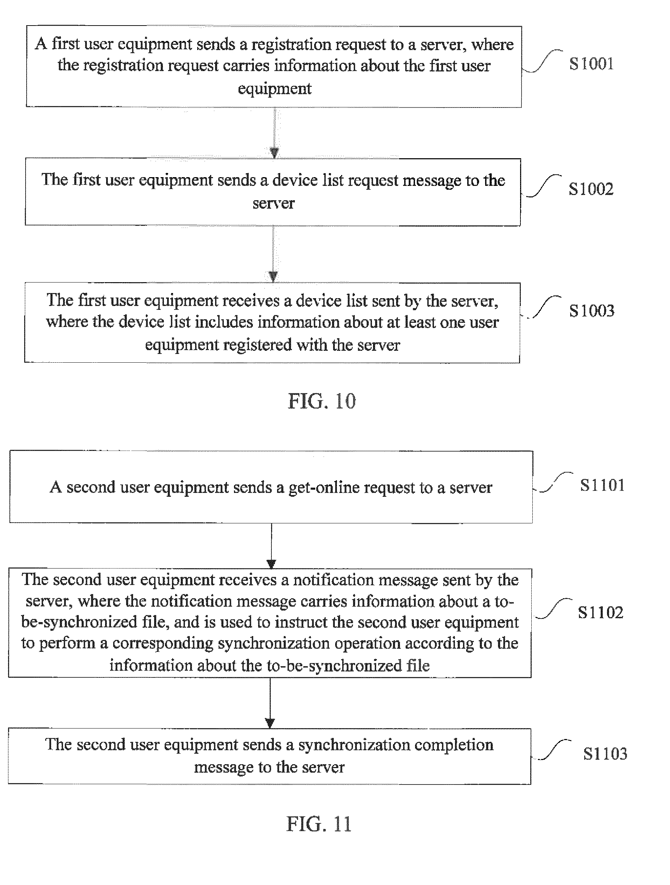

FIG. 10 is a flowchart of Embodiment 12 of a data synchronization method according to the present invention. As shown in FIG. 10, a scenario of the embodiment is as follows: A server is initialized, and collects and buffers information about all registered user equipments; and a first user equipment needs to learn about device list information of a network before creating a synchronization task. On a basis of the embodiment shown in FIG. 1, the data synchronization method of the embodiment includes:

S1001. A first user equipment sends a registration request to a server, where the registration request carries information about the first user equipment.

S 1002. The first user equipment sends a device list request message to the server.

S1003. The first user equipment receives a device list sent by the server, where the device list includes information about at least one user equipment registered with the server.

According to the data synchronization method provided in the embodiment, a first user equipment sends a registration request to a server, where the registration request carries information about the first user equipment; the first user equipment sends a device list request message to the server; and then the first user equipment receives a device list sent by the server, where the device list includes information about at least one user equipment registered with the server, so as to ensure a communication connection between a user equipment and a server within a home private network or a local area network, and ensure that the user equipment can be automatically discovered after getting online.

FIG. 11 is a flowchart of Embodiment 13 of a data synchronization method according to the present invention. As shown in FIG. 11, the data synchronization method of the embodiment includes:

S 1101. A second user equipment sends a get-online request to a server.

S1102. The second user equipment receives a notification message sent by the server, where the notification message carries information about a to-be-synchronized file, and is used to instruct the second user equipment to perform a corresponding synchronization operation according to the information about the to-be-synchronized file.

S1103. The second user equipment sends a synchronization completion message to the server.

According to the data synchronization method provided in the embodiment, a second user equipment sends a get-online request to a server; the second user equipment receives a notification message sent by the server, where the notification message carries information about a to-be-synchronized file; and after completing a synchronization task, the second user equipment sends a synchronization completion message to the server. In this way, it can be implemented that a server controls data synchronization between user equipments according to historical synchronization information, thereby avoiding repeated file synchronization and improving a utilization rate of a device resource.

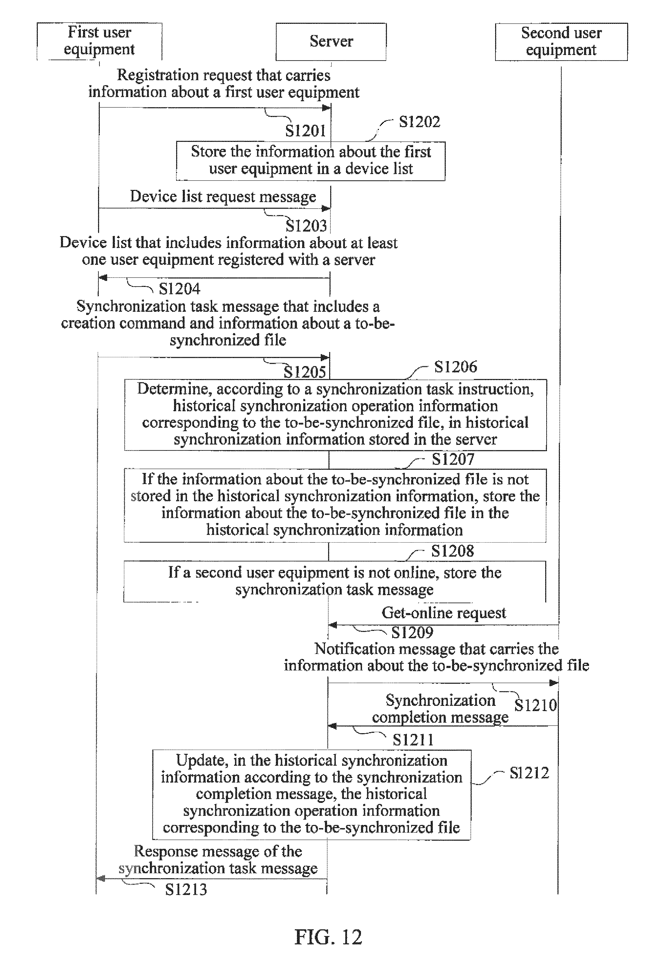

That a creation command is executed between a first user equipment, a server, and a second user equipment is used as an example in the following to describe in detail the data synchronization method according to the present invention. FIG. 12 is a flowchart of Embodiment 14 of a data synchronization method according to the present invention. As shown in FIG. 12, a scenario of the embodiment is as follows: A first user equipment needs to share a to-be-synchronized file with a second user equipment by using a server; the second user equipment is not online; and a synchronization operation is performed when the second user equipment gets online. The data synchronization method of the embodiment includes:

S1201. A first user equipment sends a registration request to a server, where the registration request carries information about the first user equipment.

S1202. The server stores the information about the first user equipment in a device list.

S1203. The first user equipment sends a device list request message to the server.

S1204. The server sends the device list to the first user equipment, where the device list includes information about at least one user equipment registered with the server.

S1205. The first user equipment sends a synchronization task message to the server, where the synchronization task message includes: a synchronization task instruction and information about a to-be-synchronized file; and the synchronization task instruction is a creation command, and the synchronization task message further carries the information about the first user equipment and information about a second user equipment.

S1206. The server determines, according to the synchronization task instruction, historical synchronization operation information corresponding to the to-be-synchronized file, in historical synchronization information stored in the server.

S1207. If the information about the to-be-synchronized file is not stored in the historical synchronization information, the server stores the information about the to-be-synchronized file in the historical synchronization information.

S1208. If the second user equipment is not online, the server stores the synchronization task message.

S1209. The second user equipment sends a get-online request to the server.

S1210. The server sends, to the second user equipment, a notification message carrying the information about the to-be-synchronized file.

S1211. The second user equipment sends a synchronization completion message to the server.

S1212. The server updates, in the historical synchronization information according to the synchronization completion message, the historical synchronization operation information corresponding to the to-be-synchronized file.

S1213. The server sends a response message of the synchronization task message to the first user equipment, where an execution result that is of the synchronization task instruction and carried in the response message is used to indicate that the second user equipment has performed a corresponding synchronization operation according to the information about the to-be-synchronized file.

According to the data synchronization method provided in the embodiment, a server receives a synchronization task message sent by a first user equipment, where the synchronization task message includes a creation command and information about a to-be-synchronized file; the server determines, according to a synchronization task instruction, historical synchronization operation information corresponding to the to-be-synchronized file, in historical synchronization information stored in the server; if the server determines, according to the historical synchronization operation information corresponding to the to-be-synchronized file, that a second user equipment has not performed a synchronization operation on the to-be-synchronized file, and if the second user equipment is not online, the server first stores the synchronization task message, and after the second user equipment gets online, sends the notification message to the second user equipment; after the second equipment completes a synchronization operation, the server sends a response message of the synchronization task message to the first user equipment, where an execution result that is of the synchronization task instruction and carried in the response message is used to indicate that the second user equipment has performed a corresponding synchronization operation according to the information about the to-be-synchronized file. In this way, it can be implemented that a server controls data synchronization between user equipments according to historical synchronization information, thereby avoiding repeated file synchronization and improving a utilization rate of a device resource; and it can also be implemented that a synchronization task is created for a user equipment that is not online.

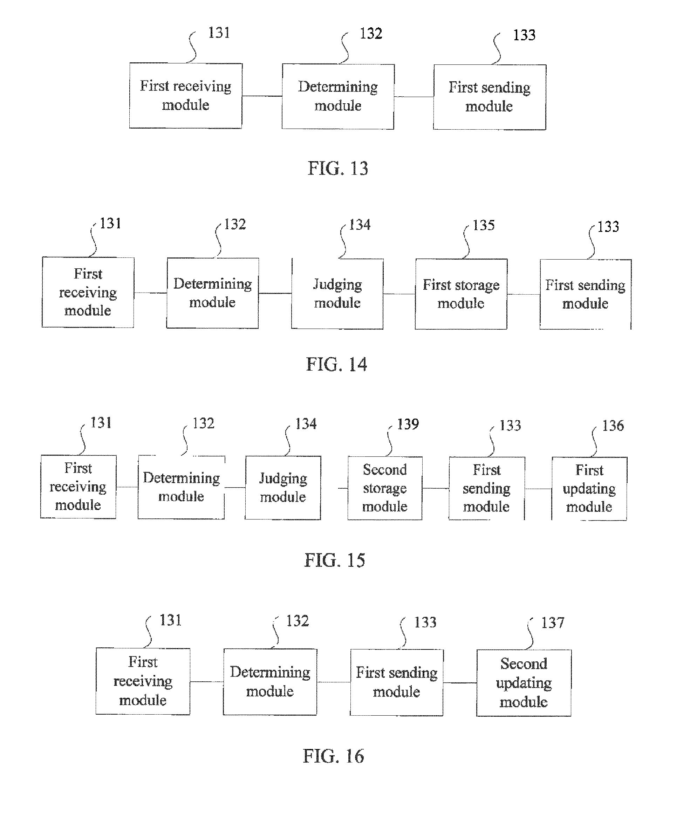

FIG. 13 is a schematic structural diagram of Embodiment 1 of a server according to the present invention. As shown in FIG. 13, the server in the embodiment includes: a first receiving module 131, a determining module 132, and a first sending module 133. The first receiving module 131 is configured to receive a synchronization task message sent by a first user equipment, where the synchronization task message includes: a synchronization task instruction and information about a to-be-synchronized file; the determining module 132 is configured to determine, according to the synchronization task instruction, historical synchronization operation information corresponding to the to-be-synchronized file, in historical synchronization information stored in the server; and the first sending module 133 is configured to send a response message of the synchronization task message to the first user equipment, where the response message carries an execution result of the synchronization task instruction.

Optionally, the information about the to-be-synchronized file includes a universal resource locator URL corresponding to a storage address of the to-be-synchronized file; or
the information about the to-be-synchronized file includes a URL corresponding to a storage address of the to-be-synchronized file, and further includes a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

The apparatus of the embodiment can be used to implement the technical solution in the method embodiment shown in FIG. 1. Implementation principles and technical effects thereof are similar, and details are not described herein again.

FIG. 14 is a schematic structural diagram of Embodiment 2 of a server according to the present invention. As shown in FIG. 14, on a basis of the embodiment shown in FIG. 13, in the server of the embodiment, a first receiving module 131 is further configured to receive a synchronization task message sent by a first user equipment, where the synchronization task message includes: a synchronization task instruction and information about a to-be-synchronized file; and the synchronization task instruction is a creation command, and the synchronization task message further carries information about the first user equipment and information about a second user equipment.

The server of the embodiment further includes: a judging module 134 and a first storage module 135, where the judging module 134 is configured to: after the historical synchronization operation information corresponding to the to-be-synchronized file is determined in the historical synchronization information stored in the server, determine whether the information about the to-be-synchronized file is already stored in the historical synchronization information; and the first storage module 135 is configured to: if the information about the to-be-synchronized file is not stored in the historical synchronization information, store the information about the to-be-synchronized file in the historical synchronization information.

The first sending module 133 is further configured to send a response message of the synchronization task message to the first user equipment, where an execution result that is of the synchronization task instruction and carried in the response message is used to indicate that the server has stored the information about the to-be-synchronized file in the historical synchronization information.

The apparatus of the embodiment can be used to implement the technical solution in the method embodiment shown in FIG. 2. Implementation principles and technical effects thereof are similar, and details are not described herein again.

FIG. 15 is a schematic structural diagram of Embodiment 3 of a server according to the present invention. As shown in FIG. 15, on a basis of the embodiment shown in FIG. 13, in the server of the embodiment, a first receiving module 131 is configured to receive a synchronization task message sent by a first user equipment, where the synchronization task message includes: a synchronization task instruction and information about a to-be-synchronized file; and the synchronization task instruction is a creation command, and the synchronization task message further carries information about the first user equipment and information about a second user equipment.

The determining module 132 is further configured to: after the historical synchronization operation information corresponding to the to-be-synchronized file is determined in the historical synchronization information stored in the server, determine, according to the historical synchronization operation information corresponding to the to-be-synchronized file, that the second user equipment has not performed a synchronization operation on the to-be-synchronized file.

The first sending module 133 is further configured to send a notification message to the second user equipment, where the notification message carries the information about the to-be-synchronized file, and the notification message is used to instruct the second user equipment to perform a corresponding synchronization operation according to the information about the to-be-synchronized file.

The server in the embodiment further includes a second storage module 139, where the second storage module 139 is configured to associatively store the notification message in the historical synchronization information.

The determining module 132 is further configured to determine whether the second user equipment is online.

The second storage module 139 is further configured to: if the second user equipment is not online, store the synchronization task message.

The first receiving module 131 is further configured to receive a get-online request from the second user equipment.

The first sending module 133 is further configured to send, to the second user equipment according to the stored synchronization task message, the notification message carrying the information about the to-be-synchronized file.

The first sending module 133 is further configured to send a response message of the synchronization task message to the first user equipment, where an execution result that is of the synchronization task instruction and carried in the response message is used to indicate that the second user equipment has performed the corresponding synchronization operation according to the information about the to-be-synchronized file.

The first receiving module 131 is further configured to: after the notification message is sent to the second user equipment, receive a synchronization completion message sent by the second user equipment.

The server in the embodiment further includes a first updating module 136, where the first updating module 136 is configured to update, in the historical synchronization information according to the synchronization completion message, the historical synchronization operation information corresponding to the to-be-synchronized file.

The apparatus of the embodiment can be used to implement the technical solution in the method embodiment shown in FIG. 3A and FIG. 3B. Implementation principles and technical effects thereof are similar, and details are not described herein again.

On a basis of the embodiment shown in FIG. 13, in Embodiment 4 of a server according to the present invention, a first receiving module 131 is configured to receive a synchronization task message sent by a first user equipment, where the synchronization task message includes: a synchronization task instruction and information about a to-be-synchronized file; and the synchronization task instruction is a query command.

The first sending module 133 is further configured to send a response message of the synchronization task message to the first user equipment, where an execution result that is of the synchronization task instruction and carried in the response message carries historical synchronization operation information corresponding to the to-be-synchronized file in historical synchronization information.

The apparatus of the embodiment can be used to implement the technical solution shown in Embodiment 4 of the data synchronization method. Implementation principles and technical effects thereof are similar, and details are not described herein again.

FIG. 16 is a schematic structural diagram of Embodiment 5 of a server according to the present invention. As shown in FIG. 16, on a basis of the embodiment shown in FIG. 13, in the server of the embodiment, a first receiving module 131 is configured to receive a synchronization task message sent by a first user equipment, where the synchronization task message includes: a synchronization task instruction and information about a to-be-synchronized file; and the synchronization task instruction is an update command, and the synchronization task message further carries information about a second user equipment.

The server in the embodiment further includes a second updating module 137, where the second updating module 137 is configured to: after the historical synchronization operation information corresponding to the to-be-synchronized file is determined in the historical synchronization information stored in the server, update, in the historical synchronization information according to the information about the second user equipment, the historical synchronization operation information corresponding to the to-be-synchronized file.

The first sending module 133 is further configured to send a response message of the synchronization task message to the first user equipment, where an execution result that is of the synchronization task instruction and carried in the response message is used to indicate that the server has updated, in the historical synchronization information according to the information about the second user equipment, the historical synchronization operation information corresponding to the to-be-synchronized file.

The apparatus of the embodiment can be used to implement the technical solution in the method embodiment shown in FIG. 4. Implementation principles and technical effects thereof are similar, and details are not described herein again.

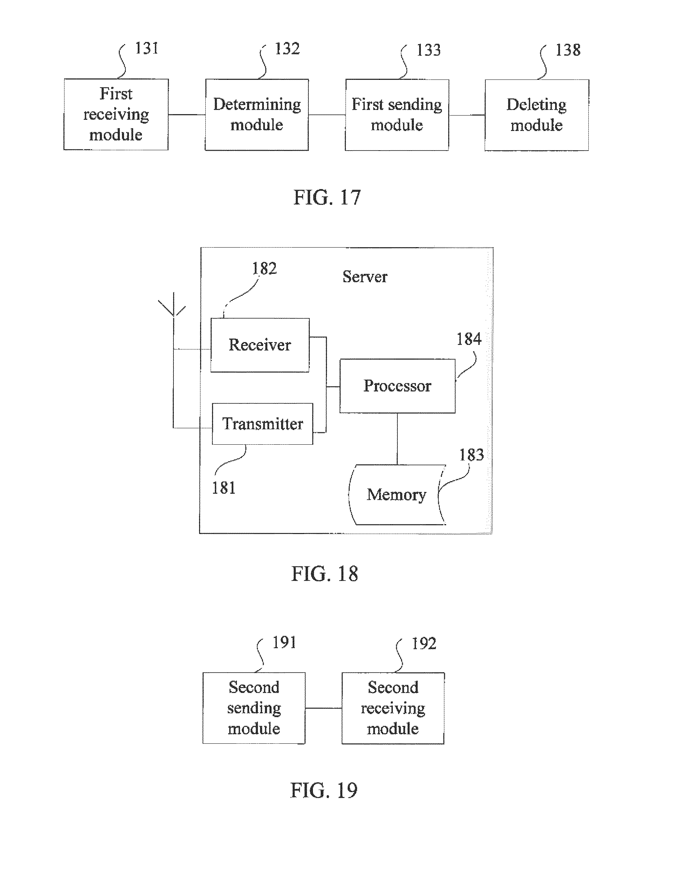

FIG. 17 is a schematic structural diagram of Embodiment 6 of a server according to the present invention. As shown in FIG. 17, on a basis of the embodiment shown in FIG. 13, in the server of the embodiment, a first receiving module 131 is configured to receive a synchronization task message sent by a first user equipment, where the synchronization task message includes: a synchronization task instruction and information about a to-be-synchronized file; and the synchronization task instruction is a deletion command, and the synchronization task message further carries information about a second user equipment.

The server of the embodiment further includes a deleting module 138, where the deleting module 138 is configured to configured to: after the historical synchronization operation information corresponding to the to-be-synchronized file is determined in the historical synchronization information stored in the server, delete, from the historical synchronization information, historical synchronization operation information corresponding to the second user equipment in the to-be-synchronized file.

The first sending module 133 is further configured to send a response message of the synchronization task message to the first user equipment, where an execution result that is of the synchronization task instruction and carried in the response message is used to indicate that the server has deleted, from the historical synchronization information, the historical synchronization operation information corresponding to the second user equipment in the to-be-synchronized file.

The apparatus of the embodiment can be used to implement the technical solution in the method embodiment shown in FIG. 5. Implementation principles and technical effects thereof are similar, and details are not described herein again.

On a basis of the foregoing embodiment of the server, in Embodiment 7 of the server according to the present invention, a first receiving module 131 is further configured to: before the server receives a synchronization task message sent by a first user equipment, receive a registration request sent by the first user equipment, where the registration request carries information about the first user equipment; and
the server further includes: a third storage module, where the third storage module is configured for the server to store the information about the first user equipment to a device list;
the first receiving module 131 is further configured to: before the server receives the synchronization task message sent by the first user equipment, receive a device list request message sent by the first user equipment; and
the first sending module 133 is further configured to send the device list to the first user equipment, where the device list includes information about at least one user equipment registered with the server.

The apparatus of the embodiment can be used to implement the technical solution in the method embodiment shown in FIG. 6. Implementation principles and technical effects thereof are similar, and details are not described herein again.

FIG. 18 is a schematic structural diagram of Embodiment 7 of a server according to the present invention. As shown in FIG. 18, the server of the embodiment includes a transmitter 181, a receiver 182, a memory 183, and a processor 184 that is separately connected to the transmitter 181, the receiver 182, and the memory 183. Certainly, the server may further include general-purpose components such as an antenna, a baseband processing component, an intermediate radio frequency processing component, and an input/output apparatus, which is not limited by the embodiment of the present invention.

The memory 183 stores a group of program code, and the processor 184 is configured to invoke the program code stored in the memory 183 to perform the following operations:
receiving a synchronization task message sent by a first user equipment, where the synchronization task message includes: a synchronization task instruction and information about a to-be-synchronized file;
determining, according to the synchronization task instruction, historical synchronization operation information corresponding to the to-be-synchronized file, in historical synchronization information stored in the server; and
sending a response message of the synchronization task message to the first user equipment, where the response message carries an execution result of the synchronization task instruction.

It should be noted that the server shown in FIG. 13 to FIG. 18 can be used to implement any one of the methods provided in the foregoing method embodiments, and details are not described herein again.

FIG. 19 is a schematic structural diagram of Embodiment 1 of a user equipment according to the present invention. As shown in FIG. 19, the user equipment of the embodiment includes: a second sending module 191 and a second receiving module 192. The second sending module 191 is configured to send a synchronization task message to a server, where the synchronization task message includes: a synchronization task instruction and information about a to-be-synchronized file; and the second receiving module 192 is configured to receive a response message of the synchronization task message, where the response message is sent by the server and carries an execution result of the synchronization task instruction.

Optionally, the information about the to-be-synchronized file includes a universal resource locator URL corresponding to a storage address of the to-be-synchronized file; or
the information about the to-be-synchronized file includes a URL corresponding to a storage address of the to-be-synchronized file, and further includes a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

The apparatus of the embodiment can be used to implement the technical solution in the method embodiment shown in FIG. 7. Implementation principles and technical effects thereof are similar, and details are not described herein again.

On a basis of the embodiment shown in FIG. 19, in Embodiment 2 of a user equipment according to the present invention, a second sending module 191 is further configured to send a synchronization task message to a server, where the synchronization task message includes: a synchronization task instruction and information about a to-be-synchronized file; and the synchronization task instruction is a creation command, and the synchronization task message further carries information about the first user equipment and information about a second user equipment; and the second receiving module 192 is further configured to receive a response message of the synchronization task message, where the response message is sent by the server, and an execution result that is of the synchronization task instruction and carried in the response message is used to indicate that the server has stored the information about the to-be-synchronized file in historical synchronization information.

The second sending module 191 is further configured to send a synchronization task message to the server, where the synchronization task message includes: a synchronization task instruction and information about a to-be-synchronized file; and the synchronization task instruction is the creation command, and the synchronization task message further carries the information about the first user equipment and the information about the second user equipment; and the second receiving module 192 is further configured to receive a response message of the synchronization task message, where the response message is sent by the server, and an execution result that is of the synchronization task instruction and carried in the response message is used to indicate that the second user equipment has performed a corresponding synchronization operation according to the information about the to-be-synchronized file.

The second sending module 191 is further configured to send a synchronization task message to the server, where the synchronization task message includes: a synchronization task instruction and information about a to-be-synchronized file; and the synchronization task instruction is a query command; and the second receiving module 192 is further configured to receive a response message of the synchronization task message, where the response message is sent by the server, and an execution result that is of the synchronization task instruction and carried in the response message carries historical synchronization operation information that is corresponding to the to-be-synchronized file and in historical synchronization information.

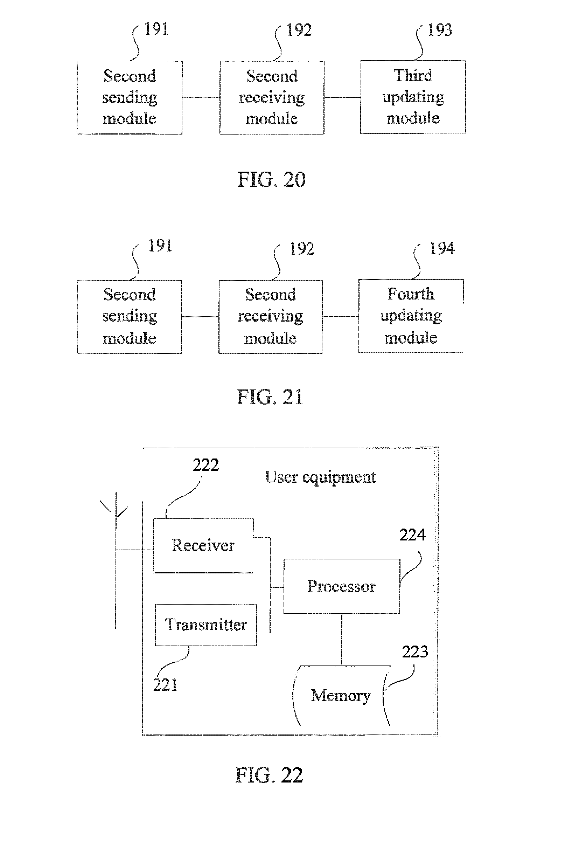

FIG. 20 is a schematic structural diagram of Embodiment 3 of a user equipment according to the present invention. As shown in FIG. 20, on a basis of the embodiment shown in FIG. 19, in the user equipment of the embodiment, a second sending module 191 is further configured to send a synchronization task message to a server, where the synchronization task message includes: a synchronization task instruction and information about a to-be-synchronized file; and the synchronization task instruction is an update command, and the synchronization task message further carries information about a second user equipment; and the second receiving module 192 is further configured to receive a response message of the synchronization task message, where the response message is sent by the server, and an execution result that is of the synchronization task instruction and carried in the response message is used to indicate that the server has updated, in historical synchronization information according to the information about the second user equipment, historical synchronization operation information corresponding to the to-be-synchronized file.

The user equipment of the embodiment further includes a third updating module 193, where the third updating module 193 is configured to update, according to the response message, locally stored historical synchronization operation information corresponding to the to-be-synchronized file.

The apparatus of the embodiment can be used to implement the technical solution in the method embodiment shown in FIG. 8. Implementation principles and technical effects thereof are similar, and details are not described herein again.

FIG. 21 is a schematic structural diagram of Embodiment 4 of a user equipment according to the present invention. As shown in FIG. 21, on a basis of the embodiment shown in FIG. 19, in the user equipment of the embodiment, a second sending module 191 is further configured to send a synchronization task message to a server, where the synchronization task message includes: a synchronization task instruction and information about a to-be-synchronized file; and the synchronization task instruction is a deletion command, and the synchronization task message further carries information about a second user equipment; and the second receiving module 192 is further configured to receive a response message of the synchronization task message, where the response message is sent by the server, and an execution result that is of the synchronization task instruction and carried in the response message is used to indicate that the server has deleted, from historical synchronization information, historical synchronization operation information corresponding to the second user equipment in the to-be-synchronized file.

The user equipment of the embodiment further includes a fourth updating module 194, where the fourth updating module 194 is configured to update, according to the response message, locally stored historical synchronization operation information corresponding to the to-be-synchronized file.

The apparatus of the embodiment can be used to implement the technical solution in the method embodiment shown in FIG. 9. Implementation principles and technical effects thereof are similar, and details are not described herein again.

On a basis of the foregoing embodiment of the user equipment, in Embodiment 5 of a user equipment according to the present invention, a second sending module 191 is further configured to send, before a first user equipment sends a synchronization task message to a server, a registration request to the server, where the registration request carries information about the first user equipment.

The second sending module 191 is further configured to: before the first user equipment sends the synchronization task message to the server, send a device list request message to the server.

The second receiving module 192 is further configured to receive a device list sent by the server, where the device list includes information about at least one user equipment registered with the server.

The apparatus of the embodiment can be used to implement the technical solution in the method embodiment shown in FIG. 10. Implementation principles and technical effects thereof are similar, and details are not described herein again.

FIG. 22 is a schematic structural diagram of Embodiment 6 of a user equipment according to the present invention. As shown in FIG. 22, the user equipment in the embodiment includes a transmitter 221, a receiver 222, a memory 223, and a processor 224 that is separately connected to the transmitter 221, the receiver 222, and the memory 223. Certainly, the server may further include general-purpose components such as an antenna, a baseband processing component, an intermediate radio frequency processing component, and an input/output apparatus, which is not limited by the embodiment of the present invention.

The memory 223 stores a group of program code, and the processor 224 is configured to invoke the program code stored in the memory 223 to perform the following operations:
sending a synchronization task message to a server, where the synchronization task message includes: a synchronization task instruction and information about a to-be-synchronized file; and
receiving a response message of the synchronization task message, where the response message is sent by the server and carries an execution result of the synchronization task instruction.

It should be noted that the server shown in FIG. 19 to FIG. 22 can be used to implement any one of the methods provided in the foregoing method embodiments, and details are not described herein again.

The schematic structural diagrams corresponding to the foregoing embodiments are merely exemplary, connection relationships between various parts or modules are not limited to the forms shown in the figures, and situations in actual applications may prevail.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data synchronization method, comprising:
receiving, by a server, a synchronization task message sent by a first user equipment, wherein the synchronization task message comprises: a synchronization task instruction and information about a to-be-synchronized file;
determining, by the server according to the synchronization task instruction, historical synchronization operation information corresponding to the to-be-synchronized file, in historical synchronization information stored in the server; and
sending, by the server, a response message of the synchronization task message to the first user equipment, wherein the response message carries an execution result of the synchronization task instruction.

2. The method according to claim 1, wherein the information about the to-be-synchronized file comprises a universal resource locator URL corresponding to a storage address of the to-be-synchronized file; or
the information about the to-be-synchronized file comprises a URL corresponding to a storage address of the to-be-synchronized file, and further comprises a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

3. The method according to claim 1 or 2, wherein the synchronization task instruction is a creation command, and the synchronization task message further carries information about the first user equipment and information about a second user equipment; and
after the determining, by the server according to the synchronization task instruction, historical synchronization operation information corresponding to the to-be-synchronized file, in historical synchronization information stored in the server, the method further comprises:
determining, by the server, whether the information about the to-be-synchronized file is already stored in the historical synchronization information; and
if the information about the to-be-synchronized file is not stored in the historical synchronization information, storing, by the server, the information about the to-be-synchronized file in the historical synchronization information.

4. The method according to claim 3, wherein the execution result that is of the synchronization task instruction and carried in the response message is used to indicate that the server has stored the information about the to-be-synchronized file in the historical synchronization information.

5. The method according to any one of claims 1 to 4, wherein the synchronization task instruction is the creation command, and the synchronization task message further carries the information about the first user equipment and the information about the second user equipment; and
after the determining, by the server according to the synchronization task instruction, historical synchronization operation information corresponding to the to-be-synchronized file, in historical synchronization information stored in the server, the method further comprises:
if the server determines, according to the historical synchronization operation information corresponding to the to-be-synchronized file, that the second user equipment has not performed a synchronization operation on the to-be-synchronized file, sending, by the server, a notification message to the second user equipment, wherein the notification message carries the information about the to-be-synchronized file, and the notification message is used to instruct the second user equipment to perform a corresponding synchronization operation according to the information about the to-be-synchronized file; and
associatively storing, by the server, the notification message in the historical synchronization information.

6. The method according to claim 5, wherein the sending, by the server, a notification message to the second user equipment comprises:
determining, by the server, whether the second user equipment is online;
if the second user equipment is not online, storing, by the server, the synchronization task message;
receiving, by the server, a get-online request from the second user equipment; and
sending, by the server, the notification message to the second user equipment according to the stored synchronization task message, wherein the notification message carries the information about the to-be-synchronized file.

7. The method according to claim 5 or 6, wherein the execution result that is of the synchronization task instruction and carried in the response message is used to indicate that the second user equipment has performed the corresponding synchronization operation according to the information about the to-be-synchronized file.

8. The method according to any one of claims 5 to 7, wherein after the sending, by the server, a notification message to the second user equipment, the method further comprises:
receiving, by the server, a synchronization completion message sent by the second user equipment; and
updating, by the server according to the synchronization completion message, in the historical synchronization information, the historical synchronization operation information corresponding to the to-be-synchronized file.

9. The method according to claim 1 or 2, wherein the synchronization task instruction is a query command; and the execution result that is of the synchronization task instruction and carried in the response message carries the historical synchronization operation information that is corresponding to the to-be-synchronized file and in the historical synchronization information.

10. The method according to claim 1 or 2, wherein the synchronization task instruction is an update command, and the synchronization task message further carries information about a second user equipment; and
after the determining, by the server according to the synchronization task instruction, historical synchronization operation information corresponding to the to-be-synchronized file, in historical synchronization information stored in the server, the method further comprises:
updating, by the server according to the information about the second user equipment, in the historical synchronization information, the historical synchronization operation information corresponding to the to-be-synchronized file.

11. The method according to claim 10, wherein the execution result that is of the synchronization task instruction and carried in the response message is used to indicate that the server has updated, in the historical synchronization information according to the information about the second user equipment, the historical synchronization operation information corresponding to the to-be-synchronized file.

12. The method according to claim 1 or 2, wherein the synchronization task instruction is a deletion command, and the synchronization task message further carries information about a second user equipment; and
after the determining, by the server according to the synchronization task instruction, historical synchronization operation information corresponding to the to-be-synchronized file, in historical synchronization information stored in the server, the method further comprises:
deleting, by the server, from the historical synchronization information, historical synchronization operation information corresponding to the second user equipment in the to-be-synchronized file.

13. The method according to claim 12, wherein the execution result that is of the synchronization task instruction and carried in the response message is used to indicate that the server has deleted, from the historical synchronization information, the historical synchronization operation information corresponding to the second user equipment in the to-be-synchronized file.

14. The method according to any one of claims 1 to 13, wherein before the receiving, by a server, a synchronization task message sent by a first user equipment, the method further comprises:
receiving, by the server, a registration request sent by the first user equipment, wherein the registration request carries the information about the first user equipment; and
storing, by the server, the information about the first user equipment in a device list.

15. The method according to any one of claims 1 to 13, wherein before the receiving, by a server, a synchronization task message sent by a first user equipment, the method further comprises:
receiving, by the server, a device list request message sent by the first user equipment; and
sending, by the server, a device list to the first user equipment, wherein the device list comprises information about at least one user equipment registered with the server.

16. A data synchronization method, comprising:
sending, by a first user equipment, a synchronization task message to a server, wherein the synchronization task message comprises: a synchronization task instruction and information about a to-be-synchronized file; and
receiving, by the first user equipment, a response message of the synchronization task message, wherein the response message is sent by the server and carries an execution result of the synchronization task instruction.

17. The method according to claim 16, wherein the information about the to-be-synchronized file comprises a universal resource locator URL corresponding to a storage address of the to-be-synchronized file; or
the information about the to-be-synchronized file comprises a URL corresponding to a storage address of the to-be-synchronized file, and further comprises a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

18. The method according to claim 16 or 17, wherein the synchronization task instruction is a creation command, and the synchronization task message further carries information about the first user equipment and information about a second user equipment; and
the execution result that is of the synchronization task instruction and carried in the response message is used to indicate that the server has stored the information about the to-be-synchronized file in the historical synchronization information.

19. The method according to any one of claims 16 to 18, wherein the synchronization task instruction is the creation command, and the synchronization task message further carries the information about the first user equipment and the information about the second user equipment; and
the execution result that is of the synchronization task instruction and carried in the response message is used to indicate that the second user equipment has performed a corresponding synchronization operation according to the information about the to-be-synchronized file.

20. The method according to claim 16 or 17, wherein the synchronization task instruction is a query command; and
the execution result that is of the synchronization task instruction and carried in the response message carries historical synchronization operation information that is corresponding to the to-be-synchronized file and in the historical synchronization information.

21. The method according to claim 16 or 17, wherein the synchronization task instruction is an update command, and the synchronization task message further carries information about a second user equipment;
the execution result that is of the synchronization task instruction and carried in the response message is used to indicate that the server has updated, in historical synchronization information according to the information about the second user equipment, historical synchronization operation information corresponding to the to-be-synchronized file; and
the first user equipment updates, according to the response message, locally stored historical synchronization operation information corresponding to the to-be-synchronized file.

22. The method according to claim 16 or 17, wherein the synchronization task instruction is a deletion command, and the synchronization task message further carries information about a second user equipment;
the execution result that is of the synchronization task instruction and carried in the response message is used to indicate that the server has deleted, from historical synchronization information, historical synchronization operation information corresponding to the second user equipment in the to-be-synchronized file; and
the first user equipment updates, according to the response message, locally stored historical synchronization operation information corresponding to the to-be-synchronized file.

23. The method according to any one of claims 16 to 22, wherein before the sending, by a first user equipment, a synchronization task message to a server, the method further comprises:
sending, by the first user equipment, a registration request to the server, wherein the registration request carries the information about the first user equipment.

24. The method according to any one of claims 16 to 22, wherein before the sending, by a first user equipment, a synchronization task message to a server, the method further comprises:
sending, by the first user equipment, a device list request message to the server; and
receiving, by the first user equipment, a device list sent by the server, wherein the device list comprises information about at least one user equipment registered with the server.

25. A server, comprising:
a first receiving module, configured to receive a synchronization task message sent by a first user equipment, wherein the synchronization task message comprises: a synchronization task instruction and information about a to-be-synchronized file;
a determining module, configured to determine, according to the synchronization task instruction, historical synchronization operation information corresponding to the to-be-synchronized file, in historical synchronization information stored in the server; and
a first sending module, configured to send a response message of the synchronization task message to the first user equipment, wherein the response message carries an execution result of the synchronization task instruction.

26. The server according to claim 25, wherein the information about the to-be-synchronized file comprises a universal resource locator URL corresponding to a storage address of the to-be-synchronized file; or
the information about the to-be-synchronized file comprises a URL corresponding to a storage address of the to-be-synchronized file, and further comprises a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

27. The server according to claim 25 or 26, wherein the synchronization task instruction is a creation command, and the synchronization task message further carries information about the first user equipment and information about a second user equipment; and
the server further comprises:
a judging module, configured to: after the historical synchronization operation information corresponding to the to-be-synchronized file is determined in the historical synchronization information stored in the server, determine whether the information about the to-be-synchronized file is already stored in the historical synchronization information; and
a first storage module, configured to: if the information about the to-be-synchronized file is not stored in the historical synchronization information, store the information about the to-be-synchronized file in the historical synchronization information.

28. The server according to claim 27, wherein the execution result that is of the synchronization task instruction and carried in the response message is used to indicate that the server has stored the information about the to-be-synchronized file in the historical synchronization information.

29. The server according to any one of claims 25 to 28, wherein the synchronization task instruction is the creation command, and the synchronization task message further carries the information about the first user equipment and the information about the second user equipment;
the determining module is further configured to: after the historical synchronization operation information corresponding to the to-be-synchronized file is determined in the historical synchronization information stored in the server, determine, according to the historical synchronization operation information corresponding to the to-be-synchronized file, that the second user equipment has not performed a synchronization operation on the to-be-synchronized file;
the first sending module is further configured to send a notification message to the second user equipment, wherein the notification message carries the information about the to-be-synchronized file, and the notification message is used to instruct the second user equipment to perform a corresponding synchronization operation according to the information about the to-be-synchronized file; and the server further comprises:
a second storage module, configured to associatively store the notification message in the historical synchronization information.

30. The server according to claim 29, wherein the determining module is further configured to determine whether the second user equipment is online;
the second storage module is further configured to: if the second user equipment is not online, store the synchronization task message;
the first receiving module is further configured to receive a get-online request from the second user equipment; and
the first sending module is further configured to send, to the second user equipment according to the stored synchronization task message, the notification message carrying the information about the to-be-synchronized file.

31. The server according claim 29 or 30, wherein the execution result that is of the synchronization task instruction and carried in the response message is used to indicate that the second user equipment has performed the corresponding synchronization operation according to the information about the to-be-synchronized file.

32. The server according to any one of claims 29 to 31, wherein the first receiving module is further configured to: after the notification message is sent to the second user equipment, receive a synchronization completion message sent by the second user equipment; and
the server further comprises:
a first updating module, configured to update, in the historical synchronization information according to the synchronization completion message, the historical synchronization operation information corresponding to the to-be-synchronized file.

33. The server according to claim 25 or 26, wherein the synchronization task instruction is a query command; and the execution result that is of the synchronization task instruction and carried in the response message carries the historical synchronization operation information that is corresponding to the to-be-synchronized file and in the historical synchronization information.

34. The server according to claim 25 or 26, wherein the synchronization task instruction is an update command, and the synchronization task message further carries information about a second user equipment; and
the server further comprises:
a second updating module, configured to: after the historical synchronization operation information corresponding to the to-be-synchronized file is determined in the historical synchronization information stored in the server, update, in the historical synchronization information according to the information about the second user equipment, the historical synchronization operation information corresponding to the to-be-synchronized file.

35. The server according to claim 34, wherein the execution result that is of the synchronization task instruction and carried in the response message is used to indicate that the server has updated, in the historical synchronization information according to the information about the second user equipment, the historical synchronization operation information corresponding to the to-be-synchronized file.

36. The server according to claim 25 or 26, wherein the synchronization task instruction is a deletion command, and the synchronization task message further carries information about a second user equipment; and
the server further comprises:
a deleting module, configured to: after the historical synchronization operation information corresponding to the to-be-synchronized file is determined in the historical synchronization information stored in the server, delete, from the historical synchronization information, historical synchronization operation information corresponding to the second user equipment in the to-be-synchronized file.

37. The server according to claim 36, wherein the execution result that is of the synchronization task instruction and carried in the response message is used to indicate that the server has deleted, from the historical synchronization information, the historical synchronization operation information corresponding to the second user equipment in the to-be-synchronized file.

38. The server according to any one of claims 25 to 37, wherein the first receiving module is further configured to: before the server receives the synchronization task message sent by the first user equipment, receive a registration request sent by the first user equipment, wherein the registration request carries the information about the first user equipment; and the server further comprises:
a third storage module, configured for the server to store the information about the first user equipment in a device list.

39. The server according to any one of claims 25 to 37, wherein the first receiving module is further configured to: before the server receives the synchronization task message sent by the first user equipment, receive a device list request message sent by the first user equipment; and
the first sending module is further configured to send a device list to the first user equipment, wherein the device list comprises information about at least one user equipment registered with the server.

40. A user equipment, comprising:
a second sending module, configured to send a synchronization task message to a server, wherein the synchronization task message comprises: a synchronization task instruction and information about a to-be-synchronized file; and
a second receiving module, configured to receive a response message of the synchronization task message, wherein the response message is sent by the server and carries an execution result of the synchronization task instruction.

41. The user equipment according to claim 40, wherein the information about the to-be-synchronized file comprises a universal resource locator URL corresponding to a storage address of the to-be-synchronized file; or
the information about the to-be-synchronized file comprises a URL corresponding to a storage address of the to-be-synchronized file, and further comprises a combination of one or more pieces of the following information: name information of the to-be-synchronized file, size information of the to-be-synchronized file, type information of the to-be-synchronized file, synchronization status information of the to-be-synchronized file, and priority information of the to-be-synchronized file.

42. The user equipment according to claim 40 or 41, wherein the synchronization task instruction is a creation command, and the synchronization task message further carries information about the first user equipment and information about a second user equipment; and
the execution result that is of the synchronization task instruction and carried in the response message is used to indicate that the server has stored the information about the to-be-synchronized file in the historical synchronization information.

43. The user equipment according to any one of claims 40 to 42, wherein the synchronization task instruction is a creation command, and the synchronization task message further carries the information about the first user equipment and the information about the second user equipment; and
the execution result that is of the synchronization task instruction and carried in the response message is used to indicate that the second user equipment has performed a corresponding synchronization operation according to the information about the to-be-synchronized file.

44. The user equipment according to claim 40 or 41, wherein the synchronization task instruction is a query command; and
the execution result that is of the synchronization task instruction and carried in the response message carries historical synchronization operation information that is corresponding to the to-be-synchronized file and in historical synchronization information.

45. The user equipment according to claim 40 or 41, wherein the synchronization task instruction is an update command, and the synchronization task message further carries information about a second user equipment;
the execution result that is of the synchronization task instruction and carried in the response message is used to indicate that the server has updated, in historical synchronization information according to the information about the second user equipment, historical synchronization operation information corresponding to the to-be-synchronized file; and
the user equipment further comprises:
a third updating module, configured to update, according to the response message, locally stored historical synchronization operation information corresponding to the to-be-synchronized file.

46. The user equipment according to claim 40 or 41, wherein the synchronization task instruction is a deletion command, and the synchronization task message further carries information about a second user equipment;
the execution result that is of the synchronization task instruction and carried in the response message is used to indicate that the server has deleted, from historical synchronization information, historical synchronization operation information corresponding to the second user equipment in the to-be-synchronized file; and
the user equipment further comprises:
a fourth updating module, configured to update, according to the response message, locally stored historical synchronization operation information corresponding to the to-be-synchronized file.

47. The user equipment according to any one of claims 40 to 46, wherein the second sending module is further configured to: before the first user equipment sends the synchronization task message to the server, send a registration request to the server, wherein the registration request carries the information about the first user equipment.

48. The user equipment according to any one of claims 40 to 46, wherein the second sending module is further configured to: before the first user equipment sends the synchronization task message to the server, send a device list request message to the server; and
the second receiving module is further configured to receive a device list sent by the server, wherein the device list comprises information about at least one user equipment registered with the server.
